# EUROPEAN PATENT APPLICATION

(11) **EP 3 733 359 A1**
(43) Date of publication of application: **04.11.2020**
(21) Application number: 18897300.2
(22) Date of filing: 13.12.2018
(51) Int. Cl.: B25J 19/02, B25J 13/00, G01H 3/00

(54) **ABNORMAL NOISE INSPECTION DEVICE, ABNORMAL NOISE INSPECTION METHOD, PROGRAM, AND WORKPIECE MANUFACTURING METHOD**

(30) Priority: 26.12.2017 JP 2017248723
(71) Applicant: Sony Corporation, 108-0075 Tokyo (JP)
(72) Inventor: KOBORI, Yuji, Tokyo 108-0075 (JP); TONEGAWA, Makoto, Tokyo 108-0075 (JP)
(74) Representative: D Young & Co LLP
(86) International application number: PCT/JP2018/045792
(87) International publication number: WO 2019/131156

(57) **Abstract**

A noise inspection device according to the present technology includes a robot-arm portion, a sound detection portion, and a control unit. The robot-arm portion includes an arm portion, and a holding portion that is provided to the arm portion and is capable of holding a workpiece. The sound detection portion is provided to the robot-arm portion and detects sound from the workpiece. The control unit moves, using the arm portion, the holding portion in a state of holding the workpiece to transport the workpiece; detects, using the sound detection portion, sound from the workpiece during the transportation of the workpiece; and inspects the workpiece for noise generated from the workpiece, on the basis of a signal of the detected sound.

## Description

### Technical Field

The present technology relates to a technology of, for example, a noise inspection device that inspects workpieces on the basis of noise.

### Background Art

In a conventional noise inspection device, a noise inspection is performed in a state in which a workpiece is fixed at a predetermined position in the noise inspection device (refer to, for example, Patent Literature 1 indicated below). Further, in the case of a conventional noise inspection performed on a workpiece, noise is detected that is generated due to a drive unit such as a motor, a compressor, and an optical disc drive being actually driven.

Note that Patent Literature 2 is taken as an example of a technology related to the present application.

### Citation List

### Patent Literature

Patent Literature 1: Japanese Patent Application Laid-open No. 2014-142290
Patent Literature 2: Japanese Patent Application Laid-open No. 2013-193158

### Disclosure of Invention

### Technical Problem

With respect to a conventional noise inspection device, there is a problem in which a noise inspection is not efficiently performed since the inspection is performed in a state in which a workpiece is fixed at a predetermined position in the noise inspection device.

In view of the circumstances described above, it is an object of the present technology to provide a technology of, for example, an inspection device that can efficiently inspect a workpiece for noise. Solution to Problem

A noise inspection device according to the present technology includes a robot-arm portion, a sound detection portion, and a control unit.

The robot-arm portion includes an arm portion, and a holding portion that is provided to the arm portion and is capable of holding a workpiece.

The sound detection portion is provided to the robot-arm portion and detects sound from the workpiece.

The control unit moves, using the arm portion, the holding portion in a state of holding the workpiece to transport the workpiece; detects, using the sound detection portion, sound from the workpiece during the transportation of the workpiece; and inspects the workpiece for noise generated from the workpiece, on the basis of a signal of the detected sound.

The noise inspection device has both a function of a transportation device that transports a workpiece, and a function of a noise inspection device that inspects the workpiece for noise generated from the workpiece. Thus, the noise inspection device is capable of inspecting the workpiece for the noise during the transportation of the workpiece. In this way, the workpiece can be efficiently inspected for the noise.

In the noise inspection device, the control unit may move, using the arm portion, the holding portion in first and second directions to transport the workpiece, the holding portion being in a state of holding the workpiece, the second direction being a direction opposite to the first direction; may detect, using the sound detection portion, a piece of sound generated from the workpiece due to the workpiece being moved in the first direction, and a piece of sound generated from the workpiece due to the workpiece being moved in the second direction; and may inspect the workpiece for the noise generated from the workpiece, on the basis of signals of the pieces of detected sound.

In the noise inspection device, the control unit may move the holding portion in the first direction to transport the workpiece to a first device that is a device other than the noise inspection device, and may move the holding portion in the second direction to transport the workpiece from the first device to a second device that is a device other than the noise inspection device.

In the noise inspection device, the control unit may change, using the arm portion, a posture of the holding portion in a state of holding the workpiece; may detect, using the sound detection portion, sound generated from the workpiece due to a change in a posture of the workpiece; and may inspect the workpiece for the noise generated from the workpiece, on the basis of a signal of the detected sound.

In the noise inspection device, the control unit may change the posture of the holding portion to enable a first device to perform processing on the workpiece in a state of being held by the holding portion, the first device being a device other than the noise inspection device.

In the noise inspection device, the sound detection portion may be provided to the holding portion.

In the noise inspection device, the sound detection portion may detect the sound in contact with the workpiece.

In the noise inspection device, the sound detection portion may be an acoustic emission (AE) sensor.

In the noise inspection device, the sound detection portion may detect the sound without being in contact with the workpiece.

In the noise inspection device, the sound detection portion may be a microphone.

In the noise inspection device, the control unit may inspect the workpiece for the noise generated from the workpiece, on the basis of a signal in a specific frequency band in the signal of the sound detected using the sound detection portion.

In the noise inspection device, the control unit may integrate the signal in the specific frequency band, and may inspect the workpiece for the noise generated from the workpiece, on the basis of a value obtained by the integration.

A noise inspection method according to the present technology includes:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion; and
inspecting the workpiece for noise generated from the workpiece, on the basis of a signal of the detected sound.

A program according to the present technology causes a computer to serve as a control unit that performs a process including:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion; and
inspecting the workpiece for noise generated from the workpiece, on the basis of a signal of the detected sound.

A workpiece manufacturing method according to the present technology includes:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion;
inspecting the workpiece for noise generated from the workpiece, on the basis of a signal of the detected sound; and
determining, on the basis of a result of the inspection, whether the workpiece is non-defective or defective.

### Advantageous Effects of Invention

As described above, the present technology makes it possible to provide a technology of, for example, an inspection device that can efficiently inspect a workpiece for noise.

### Brief Description of Drawings

[Fig. 1] A top view illustrating an inspection system according to a first embodiment of the present technology.
[Fig. 2] A perspective view illustrating a noise inspection device and a label application device.
[Fig. 3] An enlarged view illustrating a hand portion of the noise inspection device.
[Fig. 4] A block diagram showing an electrical configuration of the noise inspection device.
[Fig. 5] A perspective view illustrating an appearance inspection device.
[Fig. 6] A developed view of a casing of a workpiece.
[Fig. 7] A diagram showing an image-capturing angle of a line camera and an irradiation angle of a light emitting portion.
[Fig. 8] A diagram showing another image-capturing angle of the line camera and another irradiation angle of the light emitting portion.
[Fig. 9] A block diagram showing an electrical configuration of the appearance inspection device.
[Fig. 10] A flowchart showing processes performed by a control unit of the noise inspection device.
[Fig. 11] A flowchart showing processes performed by a control unit of the appearance inspection device.
[Fig. 12] A view showing trajectories of scanning by a first scanning portion and a second scanning portion of a first appearance-inspection device.
[Fig. 13] A view showing scanning movements of the first scanning portion and the second scanning portion of the first appearance-inspection device.
[Fig. 14] Another view showing the scanning movements of the first scanning portion and the second scanning portion of the first appearance-inspection device.
[Fig. 15] Still another view showing the scanning movements of the first scanning portion and the second scanning portion of the first appearance-inspection device.
[Fig. 16] Yet another view showing the scanning movements of the first scanning portion and the second scanning portion of the first appearance-inspection device.
[Fig. 17] Yet another view showing the scanning movements of the first scanning portion and the second scanning portion of the first appearance-inspection device.
[Fig. 18] Yet another view showing the scanning movements of the first scanning portion and the second scanning portion of the first appearance-inspection device.
[Fig. 19] Yet another view showing the scanning movements of the first scanning portion and the second scanning portion of the first appearance-inspection device.

### Mode(s) for Carrying Out the Invention

Now, an embodiment according to the present technology is described with reference to the drawings.

### <<First Embodiment>>

### <Overall Configuration and Each Unit/Portion of Inspection System 100>

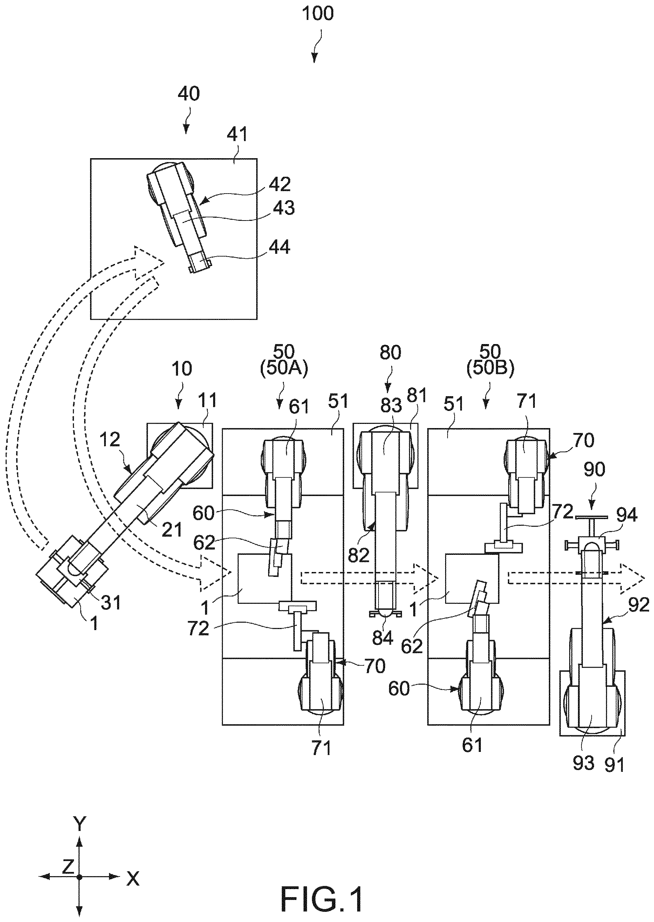

Fig. 1 is a top view illustrating an inspection system 100 according to a first embodiment of the present technology. As illustrated in Fig. 1, the inspection system 100 according to the present technology includes a noise inspection device 10, a label application device 40, a first appearance-inspection device 50A, a first transportation device 80, a second appearance-inspection device 50B, and a second transportation device 90. This inspection system 100 is arranged, for example, near a most-downstream side on a production line of workpieces 1, and performs last inspection of the workpieces 1.

Note that, herein, the two appearance inspection devices 50A and 50B are simply and collectively referred to as an appearance inspection device 50. In order to distinguish the two appearance inspection devices 50A and 50B from each other, these appearance inspection devices are respectively referred to as the first appearance-inspection device 50A and the second appearance-inspection device 50B.

In Fig. 1, a transportation route for the workpiece 1 is indicated by broken-line arrows. In this embodiment, a stationary game device is assumed as the workpiece 1 being an inspection target. This workpiece 1 includes a casing 2 having a substantially rectangular-parallelepiped shape and being thin in its thickness direction.

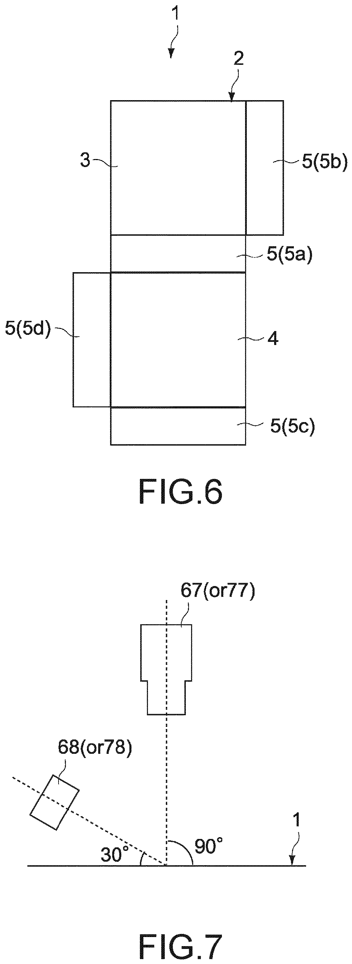

Fig. 6 is a developed view of the casing 2 of the workpiece 1. This casing 2 has six sides in total, specifically, a front side 3, a rear side 4, and four lateral sides 5. Various electronic components necessary for the game device are built in the casing 2.

Note that, herein, any lateral side of the four lateral sides 5 is simply referred to as the lateral side 5. In order to intentionally distinguish the four lateral sides 5 from each other, these lateral sides are respectively referred to as a first lateral side 5a, a second lateral side 5b, a third lateral side 5c, and a fourth lateral side 5d.

Now, for the sake of better understanding of the inspection system 100, an overall procedure of how the workpiece 1 is inspected by the inspection system 100 is briefly described (refer to the broken-line arrows in Fig. 1).

First, the workpiece 1 is transported by the noise inspection device 10 from another device (not shown) arranged on an upstream side to the label application device 40, and a label is applied by the label application device 40. When the application of the label is completed, the workpiece 1 is transported by the noise inspection device 10 from the first label-application device 40 to the first appearance-inspection device 50A.

Note that, as described below, the noise inspection device 10 has a function to inspect the workpiece 1 for noise during the transportation of the workpiece 1. With this, the workpiece 1 is subjected to noise inspection while being transported by the noise inspection device 10.

The workpiece 1 is subjected to inspection of three sides of the six sides of the workpiece 1 by the first appearance-inspection device 50A. When this inspection is completed, the workpiece 1 is transported by the first transportation device 80 from the first appearance-inspection device 50A to the second appearance-inspection device 50B.

This workpiece 1 is subjected to inspection of other three sides of the six sides of the workpiece 1 by the second appearance-inspection device 50B. When this inspection is completed, the workpiece 1 is transported by the second transportation device 90 from the second appearance-inspection device 50B to still another device (such as a packing device, a storage device, or the like) arranged on a downstream side.

Note that, while the workpiece is being inspected by the second appearance-inspection device 50B, a subsequent one of the workpieces 1 is subjected to the appearance inspection by the first appearance-inspection device 50A. In addition, at this time, another subsequent one of the workpieces 1 is subjected to processes of the noise inspection and the label application by the noise inspection device 10 and the label application device 40.

### [Noise Inspection Device 10]

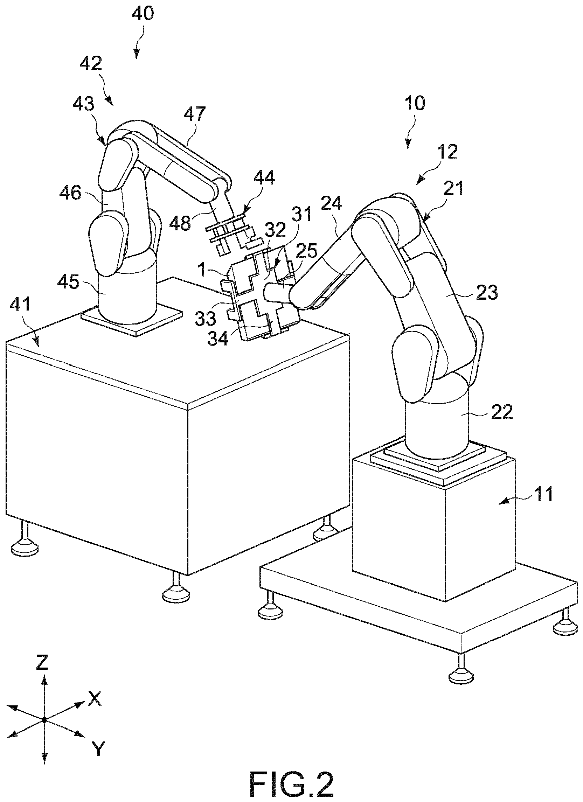

Fig. 2 is a perspective view illustrating the noise inspection device 10 and the label application device 40. As illustrated in Fig. 2, the noise inspection device 10 includes a base 11 and a robot-arm portion 12 provided on the base 11. The robot-arm portion 12 includes an articulated arm portion 21 and a hand portion 31 (holding portion) provided at a distal end of the arm portion 21.

The arm portion 21 includes a proximal portion 22 mounted to be pivotable about a Z-axis on the base 11, and an upper-arm portion 23 attached to be flexible relative to the proximal portion 22. In addition, the arm portion 21 includes a forearm portion 24 attached to be flexible relative to the upper-arm portion 23, and a wrist portion 25 attached to be flexible relative to the forearm portion 24. The hand portion 31 is attached to be turnable about the wrist portion 25 (turnable about its axis that corresponds to a longitudinal direction of the wrist portion 25).

The arm portion 21 is capable of moving the hand portion 31 (and workpiece 1 held by the hand portion 31) freely in a three-dimensional space by the pivotal movement of the proximal portion 22, the flexural movement of the upper-arm portion 23, the flexural movement of the forearm portion 24, the flexural movement of the wrist portion 25, and the turning movement of the hand portion 31. In addition, the arm portion 21 is also capable of changing a posture of the hand portion 31 (and workpiece 1 held by the hand portion 31) to an arbitrary posture by all the above-mentioned movements.

Note that, the arm portion 21 may have a structure of any type as long as at least movements of the hand portion 31 (that is, transportation of the workpiece 1 held by the hand portion 31) can be freely controlled. (For example, the upper-arm portion 23 may be omitted.)

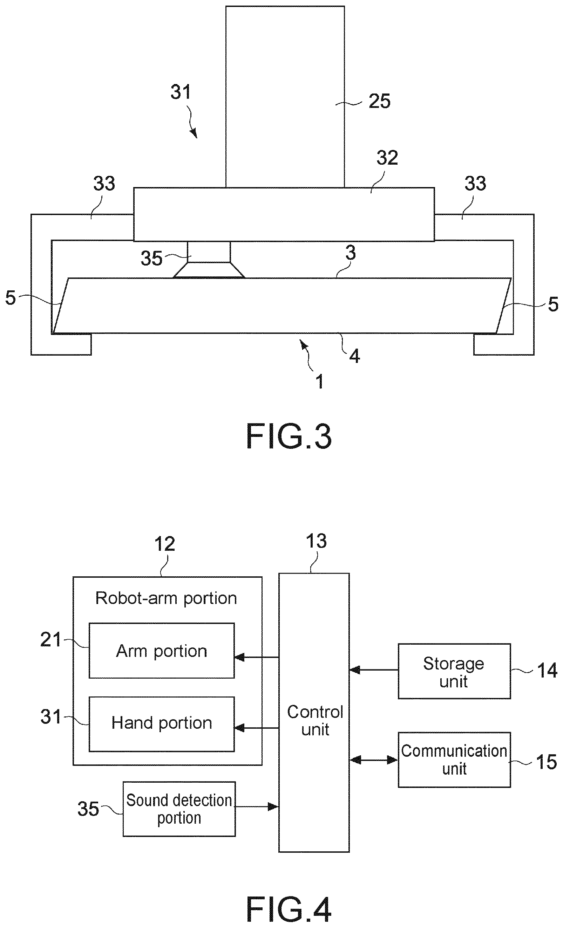

Fig. 3 is an enlarged view illustrating the hand portion 31. As illustrated in Fig. 2 and Fig. 3, the hand portion 31 includes a hand-portion body 32 attached to be turnable about the wrist portion 25, and a first chuck mechanism 33 and a second chuck mechanism 34 provided to the hand-portion body 32. In addition, the hand portion 31 is provided with a sound detection portion 35 that detects sound from the workpiece 1.

The first chuck mechanism 33 and the second chuck mechanism 34 are provided orthogonal to each other to the hand-portion body 32. The first chuck mechanism 33 is capable of sandwiching two opposite lateral sides 5 of the four lateral sides 5 of the workpiece 1 from both sides. Meanwhile, the second chuck mechanism 34 is capable of sandwiching other two opposite lateral sides 5 of the four lateral sides 5 of the workpiece 1 from both sides.

The hand portion 31 is capable of holding and releasing the workpiece 1 with the first chuck mechanism 33 and the second chuck mechanism 34.

Note that, as long as the workpiece 1 can be held and released, the hand portion 31 need not necessarily include the chuck mechanisms 33 and 34, and may have a configuration of any type. (For example, the workpiece 1 may be held by sucking.)

The arm portion 21 and the hand portion 31 each include various drive systems such as motors, and this drive system is controlled by a control unit 13 (refer to Fig. 4). With this, the movements of the arm portion 21 and the hand portion 31 are controlled.

The sound detection portion 35 detects the sound generated from the workpiece 1 due to, for example, the movement (transportation) of the workpiece 1 and a change in a posture (including turning) of the workpiece 1. The sound detection portion 35 is capable of converting (detecting) the sound generated from the workpiece 1 to electrical signals, amplifying these electrical signals, and outputting these electrical signals to the control unit 13 (refer to Fig. 4).

In this context, for example, in a case where the workpiece 1 is moved (transported) or the posture of the workpiece 1 is changed in a state in which a foreign object is trapped in the workpiece 1, the foreign object may be moved in the workpiece 1 to generate the noise. Note that, examples of the foreign object include a screw disengaged from the internal electronic components in the workpiece 1, debris formed of a damaged one of the electronic components, dust having entered the workpiece 1 from an outside, and the like.

In addition, for example, in a case where the workpiece 1 is moved (transported) or the posture of the workpiece 1 is changed in a state in which a connector at an end of a cable is disconnected in the workpiece 1, the cable and the connector may move in the workpiece 1 to generate the noise.

In the noise inspection device 10 according to this embodiment, the sound detection portion 35 detects the noise generated in the various situations as described above. Note that, in this embodiment, the noise refers to sound that is not generated even when a normal one of the workpieces 1 is moved (transported) by the robot-arm portion 12 or the posture of the normal one of the workpieces 1 is changed by the robot-arm portion 12, and that is generated in a case where an anomalous one of the workpieces 1 (one in which the foreign object is trapped, one in which the connecter is disconnected, or the like) is moved (transported) by the robot-arm portion 12 or the posture of the anomalous one of the workpieces 1 is changed by the robot-arm portion 12.

In this embodiment, the sound detection portion 35 includes an AE (Acoustic Emission) sensor, and is arranged in contact with the workpiece 1 in the state in which the workpiece 1 is held by the hand portion 31. The AE sensor includes a piezoelectric element (such as PZT), and this piezoelectric element converts an AE elastic wave, which propagates through the casing 2 of the workpiece 1, to the electrical signal.

The sound detection portion 35 is arranged at a position near a center of the workpiece 1 held by the hand portion 31 such that the noise can be properly detected even in a case where the noise is generated at any position in the workpiece 1. Meanwhile, if in which of areas in the workpiece 1 the noise is liable to be generated has been grasped in advance (for example, for such reasons that the screws, the connectors, and the like are densely arranged), the sound detection portion 35 may be arranged at a position corresponding to the area.

Fig. 4 is a block diagram showing an electrical configuration of the noise inspection device 10. As shown in Fig. 4, the noise inspection device 10 includes not only the robot-arm portion 12 and the sound detection portion 35 described above, but also the control unit 13, a storage unit 14, and a communication unit 15.

The control unit 13 includes a CPU (Central Processing Unit) or the like, and executes various calculations in accordance with various programs stored in the storage unit 14, thereby collectively controlling all the units and the portions in the noise inspection device 10.

Typically, using the arm portion 21, this control unit 13 moves the hand portion 31 in a state of holding the workpiece 1 to transport the workpiece 1, and detects the sound from the workpiece 1 during the transportation of the workpiece 1 using the sound detection portion 35. Then, on the basis of a signal of the detected sound, the control unit 13 inspects the workpiece 1 for the noise generated therefrom. Note that, details of processes performed by the control unit 13 are described below.

The storage unit 14 includes a nonvolatile memory that stores the various programs and various data items necessary for the processes performed by the control unit 13, and a volatile memory to be used as a work area for the control unit 13. The programs may be read out from a portable recording medium such as a semiconductor memory or an optical disk, or may be downloaded from a server device on a network.

The communication unit 15 communicates with other devices in a wired or a wireless manner on a production line.

### [Label Application Device 40]

As illustrated in Fig. 2, the label application device 40 includes a base 41 and a robot-arm portion 42 provided on the base 41. The robot-arm portion 42 includes an articulated arm portion 43 and a working hand portion 44 provided at a distal end of the arm portion 43.

Note that, the configuration of the arm portion 43 of the robot-arm portion 42 of the label application device 40 and the configuration of the arm portion 21 of the robot-arm portion 12 of the noise inspection device 10 are basically similar to each other except a configuration of the hand portion 44 provided at the distal end of the arm portion 43 and a configuration of the hand portion 31 provided at the distal end of the arm portion 21. Note that, the same applies to robot-arm portions of the first appearance-inspection device 50A, the first transportation device 80, the second appearance-inspection device 50B, and the second transportation device 90.

The arm portion 43 includes a proximal portion 45 mounted to be pivotable about the Z-axis on the base 41, and an upper-arm portion 46 attached to be flexible relative to the proximal portion 45. In addition, the arm portion 43 includes a forearm portion 47 attached to be flexible relative to the upper-arm portion 46, and a wrist portion 48 attached to be flexible relative to the forearm portion 47. The working hand portion 44 is attached to be turnable about the wrist portion 25 (turnable about its axis that corresponds to a longitudinal direction of the wrist portion 25).

The working hand portion 44 is capable of taking out labels from a label storage portion (not shown), and capable of applying the label from above to the lateral side 5 of the workpiece 1 in the state in which the workpiece 1 is held by the hand portion 31 of the noise inspection device 10.

Note that, although not shown, the label application device 40 includes, for example, a control unit that collectively controls all units and the portions in the label application device 40, a storage unit that stores various programs and various data items necessary for processes performed by the control unit, and a communication unit that communicates with other devices.

### [Appearance Inspection Device 50]

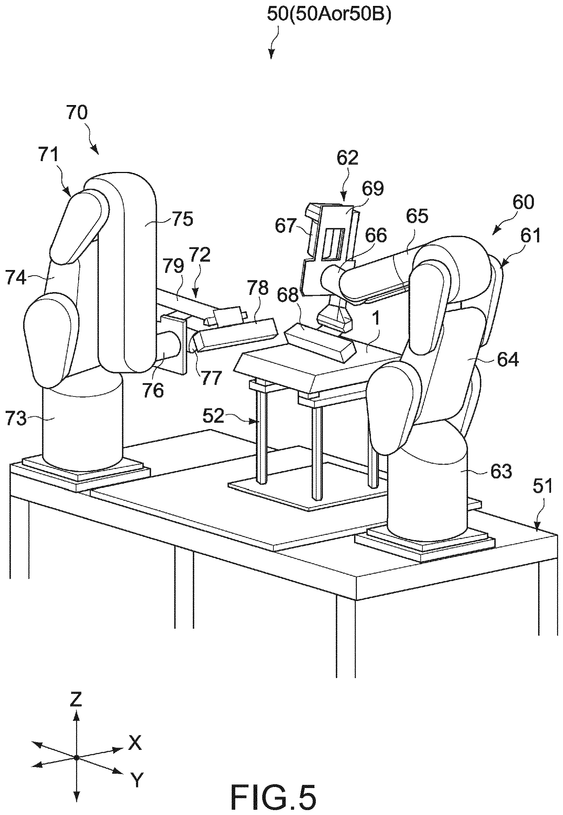

Fig. 5 is a perspective view illustrating the appearance inspection device 50 (first appearance-inspection device 50A or second appearance-inspection device 50B). The first appearance-inspection device 50A and the second appearance-inspection device 50B share tasks and work cooperatively to inspect an appearance of the workpiece 1. The first appearance-inspection device 50A and the second appearance-inspection device 50B basically have the same configuration.

The first appearance-inspection device 50A performs appearance inspection of three sides in total of the six sides of the casing 2 of the workpiece 1, specifically, the front side 3, the first lateral side 5a, and the second lateral side 5b. (These three sides are adjacent to each other.) Meanwhile, the second appearance-inspection device 50B performs appearance inspection of other three sides, specifically, a total of three sides of the rear side 4, the third lateral side 5c, and the fourth lateral side 5d. (These three sides are adjacent to each other.)

The first appearance-inspection device 50A performs the inspection with the front side 3 facing up, and the second appearance-inspection device 50B performs the inspection with the rear side 4 facing up. The first appearance-inspection device 50A and the second appearance-inspection device 50B inspect, for example, whether or not each of the sides of the workpiece 1 has appearance anomalies such as flaws (scratches and dents) and tape marks.

Note that, the appearance anomalies to be inspected for by the appearance inspection device 50 are not limited to the flaws or the tape marks. Typically, the appearance anomalies encompass appearance anomalies of any type, which are not found on normal ones of the workpieces 1.

The appearance inspection device 50 includes a base 51, a table 52 for the workpiece 1, and a first robot-arm portion 60, and a second robot-arm portion 70.

The first robot-arm portion 60 of the first appearance-inspection device 50A performs scanning of the front side 3 and a part of scanning of the second lateral side 5b. Meanwhile, the second robot-arm portion 70 of the first appearance-inspection device 50A performs scanning of the first lateral side 5a and another part of the scanning of the second lateral side 5b.

In addition, the first robot-arm portion 60 of the second appearance-inspection device 50B performs scanning of the rear side 4 and a part of scanning of the fourth lateral side 5d. Meanwhile, the second robot-arm portion 70 of the second appearance-inspection device 50B performs scanning of the third lateral side 5c and another part of the scanning of the fourth lateral side 5d.

The first robot-arm portion 60 and the second robot-arm portion 70 have basically the same configuration.

The first robot-arm portion 60 includes an articulated first-arm portion 61 and a first scanning portion 62 provided at a distal end of the first arm portion 61. Similarly, the second robot-arm portion 70 includes an articulated second-arm portion 71 and a second scanning portion 72 provided at a distal end of the second arm portion 71.

The first arm portion 61 (second arm portion 71) includes a proximal portion 63 (proximal portion 73) mounted to be pivotable about the Z-axis on the base 51, and an upper-arm portion 64 (upper-arm portion 74) attached to be flexible relative to the proximal portion 63 (proximal portion 73).

In addition, the first arm portion 61 (second arm portion 71) includes a forearm portion 65 (forearm portion 75) attached to be flexible relative to the upper-arm portion 64 (upper-arm portion 74), and a wrist portion 66 (wrist portion 76) attached to be flexible relative to the forearm portion 65 (forearm portion 75). The first scanning portion (second scanning portion 72) is attached to be turnable about the wrist portion 66 (wrist portion 76) (turnable about its axis that corresponds to a longitudinal direction of the wrist portion).

The first arm portion 61 (second arm portion 71) is capable of moving the first scanning portion 62 (second scanning portion 72) freely in the three-dimensional space by the pivotal movement of the proximal portion 63 (proximal portion 73), the flexural movement of the upper-arm portion 64 (upper-arm portion 74), the flexural movement of the forearm portion 65 (forearm portion 75), the flexural movement of the wrist portion 66 (wrist portion 76), and the turning movement of the first scanning portion 62 (second scanning portion 72). In addition, the first arm portion 61 (second arm portion 71) is also capable of changing a posture of the first scanning portion 62 (second scanning portion 72) to an arbitrary posture by all the above-mentioned movements.

Note that, the first arm portion 61 (second arm portion 71) may have a structure of any type as long as at least movements of the first scanning portion 62 (second scanning portion 72) can be freely controlled. (For example, the upper-arm portions may be omitted.)

The first scanning portion 62 includes a support member 69 attached to be turnable about the wrist portion 66, a first line camera 67 fixed to the support member 69, and a first light-emitting portion 68 fixed to the support member 69. Similarly, the second scanning portion 72 includes a support member 79 attached to be turnable about the wrist portion 76, a second line camera 77 fixed to the support member 79, and a second light-emitting portion 78 fixed to the support member 79.

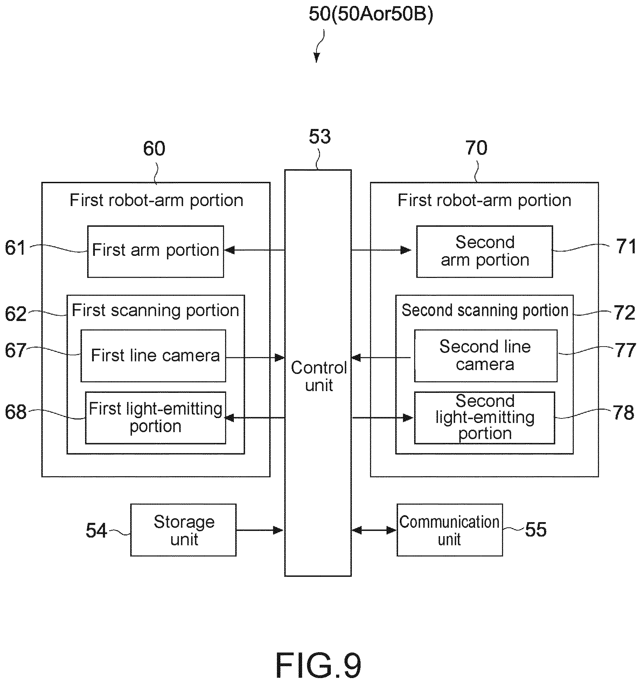

The first line camera 67 (second line camera 77) includes a plurality of imaging elements arrayed in one direction, and various optical lenses such as an imaging lens. The first line camera 67 (second line camera 77) is moved in a direction orthogonal to the one direction (direction in which the imaging elements are arrayed) by the first arm portion 61 (second arm portion 71), and at the same time, acquires an image by performing image-capturing on a specific side of the casing 2 of the workpiece 1, and outputs this image to a control unit 53 (refer to Fig. 9).

The first light-emitting portion 68 (second light-emitting portion 78) has a shape elongated in the one direction (direction in which the imaging elements are arrayed in the line camera). The first light-emitting portion 68 (second light-emitting portion 78) includes, for example, various light-emitters such as LEDs (Light Emitting Diodes) and white lamps. This first light-emitting portion 68 (second light-emitting portion 78) is moved integrally and together with the first line camera 67 (second line camera 77) by the first arm portion 61 (second arm portion 71), and at the same time, irradiates light onto a portion on which the first line camera 67 (second line camera 77) performs image-capturing.

When the first scanning portion 62 (second scanning portion 72) is moved in the scanning direction above the specific side of the workpiece 1, the first scanning portion 62 (second scanning portion 72) is moved parallel to the specific side at a fixed interval from the specific side.

The scanning direction of the first scanning portion 62 (second scanning portion 72) is adjusted by the first arm portion 61 (second arm portion 71). In addition, an image-capturing angle of the first line camera 67 (second line camera 77) of the first scanning portion 62 (second scanning portion 72), and an irradiation angle of the first light-emitting portion 68 (second light-emitting portion 78) of the first scanning portion 62 (second scanning portion 72) with respect to the specific side of the casing 2 of the workpiece 1 are adjusted by the first arm portion 61 (second arm portion 71).

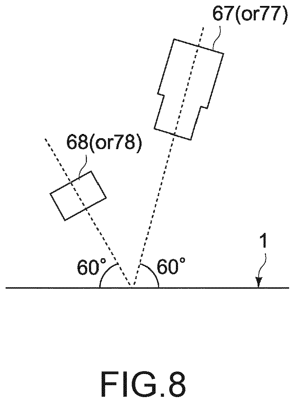

Fig. 7 and Fig. 8 are diagrams each showing the image-capturing angle of the line camera and the irradiation angle of the light emitting portion.

Fig. 7 shows an exemplary case where the image-capturing angle of the first line camera 67 (second line camera 77) is set to 90°, and where the irradiation angle of the first light-emitting portion 68 (second light-emitting portion 78) is set to 30°. Meanwhile, Fig. 8 shows an exemplary case where the image-capturing angle of the first line camera 67 (second line camera 77) is set to 60°, and where the irradiation angle of the first light-emitting portion 68 (second light-emitting portion 78) is set to 60°.

In this embodiment, first, as shown in Fig. 7, the image-capturing angle of the first line camera 67 (second line camera 77) is set to 90°, and the irradiation angle of the first light-emitting portion 68 (second light-emitting portion 78) is set to 30°. In this state, the first scanning portion 62 (second scanning portion 72) scans the specific side. Then, the image-capturing angle of the first line camera 67 (second line camera 77) is set to 60°, and the irradiation angle of the first light-emitting portion 68 (second light-emitting portion 78) is set to 60°. In this state, the first scanning portion 62 (second scanning portion 72) scans the specific side. In other words, in this embodiment, the same area in the workpiece 1 is scanned at the different image-capturing angles of the first line camera 67 (second line camera 77) and the different irradiation angles of the first light-emitting portion 68 (second light-emitting portion 78).

Note that, as shown in Fig. 7 and Fig. 8, in this embodiment, the angles of the first line camera 67 (second line camera 77) and the first light-emitting portion 68 (second light-emitting portion 78) with respect to the specific side are changed in synchronization with each other. Alternatively, the angles of the first line camera 67 (second line camera 77) and the first light-emitting portion 68 (second light-emitting portion 78) with respect to the specific side may be adjusted independent of each other.

Hereinbelow, an image-capturing angle of the first line camera 67 (second line camera 77) at a first time the scanning is performed is referred to as a first image-capturing angle (in this embodiment, 90°), and an image-capturing angle of the first line camera 67 (second line camera 77) at a second time the scanning is performed is referred to as a second image-capturing angle (in this embodiment, 60°).

Similarly, an irradiation angle of the first light-emitting portion 68 (second light-emitting portion 78) at the first time the scanning is performed is referred to as a first irradiation angle (in this embodiment, 30°), and an irradiation angle of the first light-emitting portion 68 (second light-emitting portion 78) at the second time the scanning is performed is referred to as a second irradiation angle (in this embodiment, 60°).

Note that, all the values of the first image-capturing angle, the second image-capturing angle, the first irradiation angle, and the second irradiation angle may be changed as appropriate. Typically, all these values are set as appropriate in accordance, for example, with materials of the casing 2 of the workpiece 1, and with types of the anomalies to be detected by the appearance inspection (such as flaws, tape marks, and the like).

Fig. 9 is a block diagram showing an electrical configuration of the appearance inspection device 50 (first appearance-inspection device 50A or second appearance-inspection device 50B). As shown in Fig. 9, the appearance inspection device 50 includes not only the first robot-arm portion 60 and the second robot-arm portion 70 described above, but also the control unit 53, a storage unit 54, and a communication unit 55.

The control unit 53 includes a CPU (Central Processing Unit) or the like, and executes various calculations in accordance with various programs stored in the storage unit 54, thereby collectively controlling all the units and the portions in the appearance inspection device 50.

In the appearance inspection device 50, the control unit 13 performs image-capturing on the specific side of the workpiece 1 using the first line camera 67 while moving the first scanning portion 62 in the scanning direction of the first scanning portion 62 above the specific side of the workpiece 1 using the first arm portion 61, and scans the specific side of the workpiece 1 using the first scanning portion 62.

In addition, the control unit 13 performs image-capturing on another specific side of the workpiece 1 using the second line camera 77 while moving the second scanning portion 72 in the scanning direction of the second scanning portion 72 above the other specific side of the workpiece 1 using the second arm portion 71, and scans the other specific side using the second scanning portion 72, the other specific side of the workpiece 1 being scanned using the second scanning portion 72 during which the specific side of the workpiece 1 is being scanned using the first scanning portion 62. Note that, details of processes performed by the control unit 53 are described below.

Fig. 9 shows an example in which the first robot-arm portion 60 and the second robot-arm portion 70 are controlled by the single control unit 53. However, the first robot-arm portion 60 and the second robot-arm portion 70 may be controlled respectively by independent control units.

The storage unit 54 includes a nonvolatile memory that stores the various programs and various data items necessary for the processes performed by the control unit 53, and a volatile memory to be used as a work area for the control unit 53. The programs may be read out from the portable recording medium such as the semiconductor memory or the optical disk, or may be downloaded from the server device on the network.

The communication unit 55 communicates with the other devices in the wired or the wireless manner on the production line.

### [First Transportation Device 80]

As illustrated in Fig. 1, the first transportation device 80 includes a base 81 and a robot-arm portion 82 provided on the base 81. The robot-arm portion 82 includes an articulated arm portion 83 and a hand portion 84 provided at a distal end of the arm portion 83.

The configuration of the arm portion 83 is similar to the configurations of the arm portions 21, 61, and 71 of the robot-arm portions of the noise inspection device 10 and the appearance inspection device 50. The hand portion 84 includes a chuck mechanism that is capable of sandwiching two opposite lateral sides 5 of the four lateral sides 5 of the workpiece 1 from both sides.

The robot-arm portion 82 of the first transportation device 80 holds the workpiece 1 placed on the table 52 of the first appearance-inspection device 50A, transports the workpiece 1 while inverting the workpiece 1 upside down, and then places the workpiece 1 on the table 52 of the second appearance-inspection device 50B.

Note that, although not shown, the first transportation device 80 includes a control unit that collectively controls the first transportation device 80, a storage unit that stores, for example, various programs and various data items necessary for processes performed by the control unit, and a communication unit that communicates with the other devices on the production line.

### [Second Transportation Device 90]

As illustrated in Fig. 1, the second transportation device 90 includes a base 91 and a robot-arm portion 92 provided on the base 91. The robot-arm portion 92 includes an articulated arm portion 93 and a hand portion 94 provided at a distal end of the arm portion 93.

The mechanical configuration and an electrical configuration of the second transportation device 90 are the same as those of the noise inspection device 10 except that the sound detection portion 35 is not provided.

The robot-arm portion 92 of the second transportation device 90 holds the workpiece 1 placed on the table 52 of the second appearance-inspection device 50B, and then transports the workpiece 1 to the other device (packing device or storage device) arranged on the downstream side, thereby causing the workpiece 1 to proceed to a subsequent step.

Note that, the second transportation device 90 is notified of whether the workpiece 1 to be transported is non-defective or defective from the noise inspection device 10, the first appearance-inspection device 50A, and the second appearance-inspection device.

When the workpiece 1 is determined to be non-defective by all the three devices 10, 50A, or 50B, the robot-arm portion 92 of the second transportation device 90 causes this workpiece 1 to proceed to the subsequent step. Meanwhile, when the workpiece 1 is determined to be defective by at least one of the three devices 10, 50A, and 50B, the robot-arm portion 92 does not allow this workpiece 1 to proceed to the subsequent step, and transports this workpiece 1 to a storage rack (not shown) for storing defective products.

Note that, the workpieces 1 that have been determined to be defective may be arranged in different areas on the storage rack in accordance with causes of defects.

### <Description of Operation>

Now, processes in the inspection system 100 are described.

### [Processes by Noise Inspection Device 10]

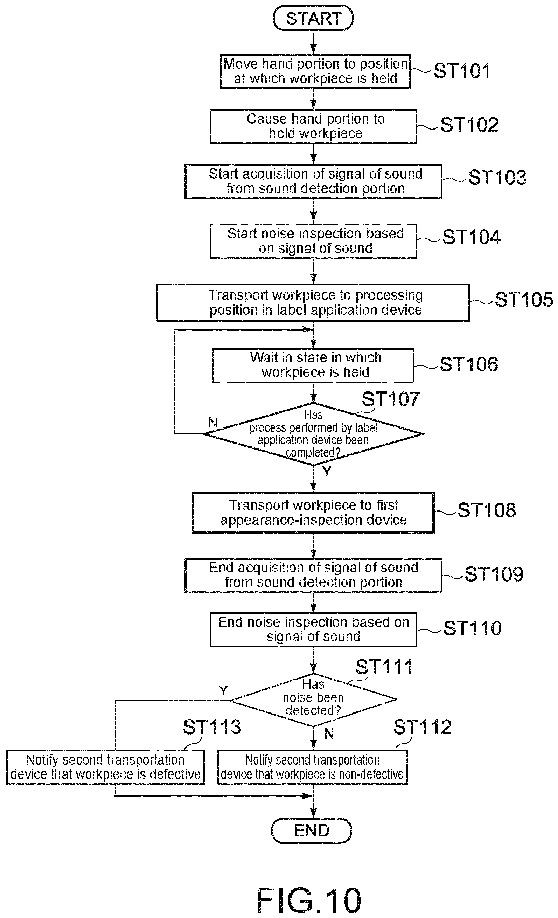

Hereinbelow, processes performed by the noise inspection device 10 are described. Fig. 10 is a flowchart showing the processes performed by the control unit 13 of the noise inspection device 10.

First, the control unit 13 of the noise inspection device 10 controls the arm portion 21 of the robot-arm portion 12 to move the hand portion 31 to a position at which the workpiece 1 is held (Step 101). Then, the control unit 13 causes the hand portion 31 to hold the workpiece 1 (Step 102). When the workpiece 1 is held by the hand portion 31, as illustrated in Fig. 3, the sound detection portion 35 is brought into contact with the vicinity of the center of the workpiece 1.

Next, the control unit 13 starts a process of acquiring a signal of the sound from the sound detection portion 35 (Step 103). After that, the control unit 13 starts the inspection of the workpiece 1 for the noise based on the signal of the detected sound (Step 104). Note that, details of this noise inspection are described below.

Then, the control unit 13 causes the arm portion 21 to pivot clockwise, thereby causing the hand portion 31 in a state of holding the workpiece 1 to pivot clockwise (to move in a first direction). With this, the workpiece 1 is transported to a processing position in the label application device 40 (Step 105).

Note that, while the workpiece 1 is being transported by causing the arm portion 21 to pivot, the control unit 13 changes the posture of the workpiece 1 to an arbitrary posture for application of the label by the flexural movement of each of the portions of the arm portion 21, and by the turning movement of the hand portion 31 relative to the arm portion 21. Note that, at this time, the workpiece 1 is held in an upright posture in which a specific one of the lateral sides 5 of the workpiece 1 faces up (refer to Fig. 2).

After the control unit 13 has transported the workpiece 1 to the processing position in the label application device 40, the control unit 13 stops the movement of the robot-arm portion 12, thereby causing the robot-arm portion 12 to wait in the state in which the workpiece 1 is held by the hand portion 31 (Step 106). In this state, the label application device 40 applies the label to a top one of the lateral sides 5 of the workpiece 1.

Next, the control unit 13 determines whether or not the process performed by the label application device 40 has been completed (Step 107). Note that, if the process performed by the label application device 40 has been completed, the label application device 40 transmits a signal that indicates the completion, and the noise inspection device 10 receives this signal.

If the process performed by the label application device 40 has been completed (YES in Step 107), the control unit 13 proceeds to Step 108. In Step 108, the control unit 13 causes the arm portion 21 to pivot counterclockwise, thereby causing the hand portion 31 in a state of holding the workpiece 1 to pivot counterclockwise (to move in a second direction). In this way, the workpiece 1 is transported from the label application device 40 to the first appearance-inspection device 50A. Then, the control unit 13 causes the hand portion 31 to release the workpiece 1, thereby placing the workpiece 1 on the table 52 of the first appearance-inspection device 50A.

Note that, while the workpiece 1 is being transported by causing the arm portion 21 to pivot counterclockwise, the control unit 13 changes the posture of the workpiece 1 to an arbitrary posture for placing the workpiece 1 on the table 52 by the flexural movement of each of the portions of the arm portion 21, and by the turning movement of the hand portion 31 relative to the arm portion 21. Note that, in the posture of the workpiece 1 at this time, the front side 3 of the workpiece 1 faces up.

When the workpiece 1 is placed on the table 52, and then the workpiece 1 is released from the hand portion 31, the sound detection portion 35 separates from the workpiece 1. At this time, the control unit 13 ends the process of acquiring the signal of the sound from the sound detection portion 35 (Step 109). Then, the control unit 13 ends the inspection of the workpiece 1 for the noise based on the signal of the sound (Step 110).

Next, the control unit 13 determines whether or not the noise has been detected by the noise inspection (Step 111). If the noise has not been detected (NO in Step 111), the control unit 13 transmits both identification information of the workpiece 1 and information indicating that the workpiece 1 is non-defective to the second transportation device 90 (Step 112). Meanwhile, if the noise has been detected (YES in Step 111), the control unit 13 transmits both the identification information of the workpiece 1 and information indicating that the workpiece 1 is defective to the second transportation device 90 (Step 113).

If the workpiece 1 has been determined to be defective by the noise inspection, after the appearance inspections by the first appearance-inspection device 50A and the second appearance-inspection device 50B, this workpiece 1 is stored in the storage rack for storing the defective products by the second transportation device 90. In this way, the defective products are separated from non-defective products.

Note that, although the workpieces 1 that have been determined to be non-defective or defective by the noise inspection are separated by the second transportation device 90 in this embodiment, this separation may be performed by the robot-arm portion 12 itself of the noise inspection device 10. In this case, the storage rack for storing the defective products is installed in an operating range of the robot-arm portion 12 of the noise inspection device 10.

### (Noise Inspection Technique)

Next, details of a method of the noise inspection based on the signal of the sound are described. As described above, when the workpiece 1 is moved (transported) or when the posture of the workpiece 1 is changed in various situations such as the state in which the foreign object is trapped in the workpiece 1 and the state in which the connector is disconnected in the workpiece 1, the noise may be generated.

Meanwhile, with regard to the normal workpiece 1, even when the workpiece 1 is moved (transported) or even when the posture of the workpiece 1 is changed, such noise is not generated. Thus, typically, the noise inspection is performed by comparing a waveform of a signal of sound from the workpiece 1 as an inspection target with a waveform of a signal of sound from the normal workpiece 1.

Specifically, in a waveform of a signal of sound from the anomalous workpiece 1, volume of the sound in a specific frequency band indicating the noise becomes higher than that in the waveform of the signal of the sound from the normal workpiece 1. More specifically, with regard to the workpiece 1 in which the screw is trapped, experimental results that values indicated by the signal of the sound increased at frequencies of 1.5 kHz, 3 kHz, 6 kHz, 12 kHz, and 24 kHz were obtained.

Much more specifically, in the workpiece 1 in which the screw is trapped, noise at the frequencies of 1.5 kHz, 3 kHz, 6 kHz, 12 kHz, and 24 kHz is generated by collision of the screw against inner walls of or other members in the workpiece 1 due to the movement (transportation) of the workpiece 1 and the change in a posture of the workpiece 1. Note that, the sound as the noise in the specific frequency band varies in accordance, for example, with a speed of the movement (transportation) of the workpiece 1, a speed of the change in a posture of the workpiece 1, the material of the casing 2 of the workpiece 1, an internal structure of the workpiece 1, and a type of the foreign object trapped in the workpiece 1.

When the frequency band of the noise has been grasped in advance, a signal of sound in the specific frequency band corresponding to the noise may be extracted (through, for example, FFT (Fast Fourier transform)) from an entirety of the signal of the sound detected by the sound detection portion 35. Then, whether or not the noise has been generated may be determined on the basis of this signal of the sound in the specific frequency band. In addition, in this case, the signal of the sound in the specific frequency band may be integrated, and whether or not the noise has been generated may be determined on the basis of a value obtained by the integration.

For example, when the noise at the frequencies of 1.5 kHz, 3 kHz, 6 kHz, 12 kHz, and 24 kHz is generated, a signal of sound in a frequency band of 1 kHz to 30 kHz is extracted from the signal of the sound detected by the sound detection portion 35. Then, whether or not the noise has been generated may be determined on the basis of this signal of the sound in the frequency band of 1 kHz to 30 kHz. In addition, in this case, for example, the signal of the sound in the frequency band of 1 kHz to 30 kHz may be integrated, and whether or not the noise has been generated may be determined on the basis of whether a value obtained by the integration exceeds a threshold.

### (Clockwise or Counterclockwise Transportation, Etc. of Workpiece 1)

As described above, when the workpiece 1 is transported to the label application device 40, the workpiece 1 is transported by being pivoted clockwise. Meanwhile, when the workpiece 1 is transported from the label application device 40 to the first appearance-inspection device 50A, the workpiece 1 is transported by being pivoted counterclockwise.

Note that, there may be a case where, although the noise is not generated by the clockwise transportation of the workpiece 1, the noise is generated by the counterclockwise transportation of the workpiece 1. In contrast, there may be another case where, although the noise is not generated by the counterclockwise transportation of the workpiece 1, the noise is generated by the clockwise transportation of the workpiece 1.

For example, with regard to the workpiece 1 in which the foreign object is trapped, depending on a position of the foreign object in the workpiece 1, the foreign object may be moved only by one of the clockwise transportation and the counterclockwise transportation, and the noise may be generated only by the one of the clockwise transportation and the counterclockwise transportation.

Meanwhile, in this embodiment, since the workpiece 1 is transported in both the clockwise direction and the counterclockwise direction, the noise can be properly detected.

In addition, as described above, while the workpiece 1 is being transported to the label application device 40, and while the workpiece 1 is being transported from the label application device 40 to the first appearance-inspection device 50A, the posture of the workpiece 1 is changed.

In this context, there may be a case where, although the noise is not generated merely by transporting the workpiece 1, the noise is generated once the posture of the workpiece 1 is changed. For example, with regard to the workpiece 1 in which the foreign object is trapped, there is a possibility that the foreign object will not move in the casing 1 to generate the noise until the posture of the workpiece 1 is changed, depending on the position of the foreign object in the workpiece 1.

Thus, by changing the posture of the workpiece 1 during the transportation of the workpiece 1 as in this embodiment, the noise can be further properly detected.

### [Processes by Appearance Inspection Device 50]

Next, processes performed by the first appearance-inspection device 50A and the second appearance-inspection device 50B are described. Note that, the processes performed by the first appearance-inspection device 50A and the processes performed by the second appearance-inspection device 50B are basically the same as each other except which of the sides to be inspected.

Thus, hereinbelow, unless otherwise noted, the processes performed by the first appearance-inspection device 50A are representatively described. Note that, with regard to the processes performed by the second appearance-inspection device 50B, the front side 3 corresponds to the rear side 4, the first lateral side 5a corresponds to the third lateral side 5c, and the second lateral side 5b corresponds to the fourth lateral side 5d.

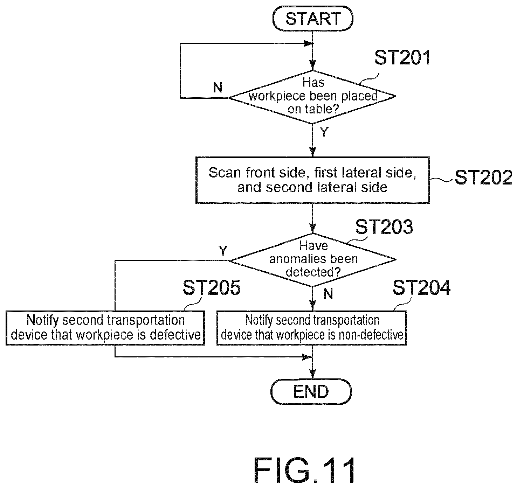

Fig. 11 is a flowchart showing the processes performed by the control unit 53 of the appearance inspection device 50. First, the control unit 53 of the first appearance-inspection device 50A determines whether or not the workpiece 1 has been placed on the table 52 (Step 201).

The determination as to whether or not the workpiece 1 has been placed is made on the basis of signals to be transmitted from the noise inspection device 10. For example, when the noise inspection device 10 places the workpiece 1 on the table 52, a signal indicating that the workpiece 1 has been placed is transmitted from the noise inspection device 10 to the first appearance-inspection device 50A.

Note that, in the second appearance-inspection device 50B, when the first transportation device 80 places the workpiece 1 on the table 52, the signal indicating that the workpiece 1 has been placed is transmitted from the first transportation device 80 to the second appearance-inspection device 50B.

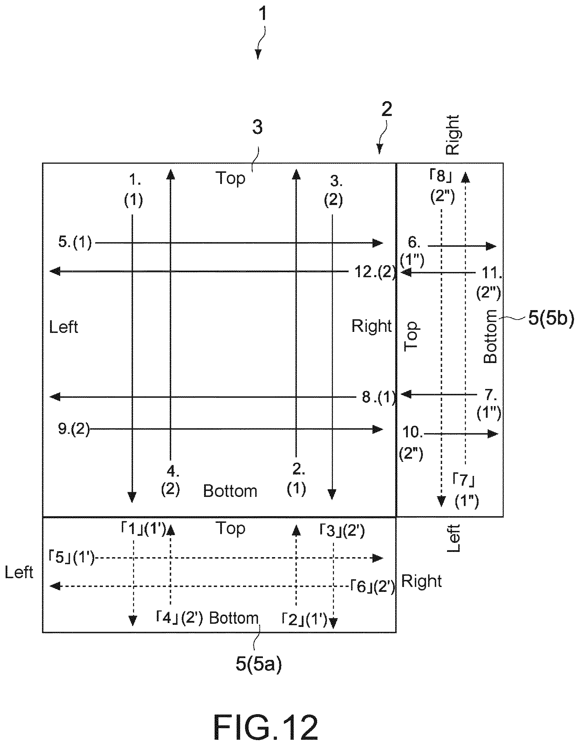

If the workpiece 1 has been placed on the table 52 (YES in Step 201), the control unit 53 controls the first robot-arm portion 60 and the second robot-arm portion 70 to scan three sides in total, specifically, the front side 3, the first lateral side 5a, and the second lateral side 5b of the casing 2 (Step 202). Note that, details of the scanning of these three sides are described below with reference to Fig. 12 to Fig. 19.

Then, the control unit 53 determines, on the basis of the images taken by the first line camera 67 and the second line camera 77, whether or not the appearance anomalies have been detected from the workpiece 1 (whether workpiece 1 is non-defective or defective) (Step 203).

For example, if even a single flaw or a single tape mark with a certain size or larger (size that can be recognized at a glance by a user) is found on the three sides, the control unit 53 determines that the appearance anomalies have been detected (YES in Step 203).

Also, if a predetermined number or larger of flaws or tape marks with a certain size or smaller (size that cannot be recognized at a glance by the user) are found on the three sides, the control unit 53 determines that the appearance anomalies have been detected (YES in Step 203).

If the appearance anomalies have not been detected (NO in Step 203), the control unit 53 transmits both identification information of the workpiece 1 and the information indicating that the workpiece 1 is non-defective to the second transportation device 90 (Step 204).

Meanwhile, if the appearance anomalies have been detected (YES in Step 203), the control unit 53 transmits both the identification information of the workpiece 1 and the information indicating that the workpiece 1 is defective to the second transportation device 90 (Step 205).

If the workpiece 1 has been determined to be defective by the first appearance-inspection device 50A, after the appearance inspection by the second appearance-inspection device 50B, this workpiece 1 is stored in the storage rack for storing the defective products by the second transportation device 90. In this way, the defective products are separated from the non-defective products.

Next, details of the appearance inspection by the first appearance-inspection device 50A are described. Fig. 12 is a view showing trajectories of the scanning by the first scanning portion 62 and the second scanning portion 72 of the first appearance-inspection device 50A.

In Fig. 12, solid-line arrows indicate trajectories of the scanning by the first scanning portion 62, and broken-line arrows indicate trajectories of the scanning by the second scanning portion 72.

The solid-line arrows are denoted by numerals 1. to 12.. These numerals represent an order of the scanning by the first scanning portion 62. Meanwhile, the broken-line arrows are denoted by numerals "1" to "8." These numerals represent an order of the scanning by the second scanning portion 72.

In addition, any of symbols (1), (2), (1'), (2'), (1"), and (2") is added to each of the numerals 1. to 12. and "1" to "8."

The parenthesized numeral 1 represents that the image-capturing angles of the line cameras 67 and 77 with respect to a specific side of the workpiece 1 are each set to the first image-capturing angle (90°), and that the irradiation angles of the light emitting portions 68 and 78 with respect to the same are each set to the first irradiation angle (30°) (refer to Fig. 7). Meanwhile, the parenthesized numeral 2 represents that the image-capturing angles of the line cameras 67 and 77 with respect to the specific side of the workpiece 1 are each set to the second image-capturing angle (60°), and that the irradiation angles of the light emitting portions 68 and 78 with respect to the same are each set to the second irradiation angle (60°) (refer to Fig. 8).

To the upper right of the parenthesized numeral 1 or 2, nothing is added, or any of "'" and """ is added. When nothing is added to the upper right of the parenthesized numeral 1 or 2, the parenthesized numeral 1 or 2 represents an image-capturing angle and an irradiation angle with respect to the front side 3.

In addition, when ""' is added to the upper right of the parenthesized numeral 1 or 2, the numeral 1 or 2 represents an image-capturing angle and an irradiation angle with respect to the first lateral side 5a. Meanwhile, when """ is added to the upper right of the parenthesized numeral 1 or 2, the numeral 1 or 2 represents an image-capturing angle and an irradiation angle with respect to the second lateral side 5b.

As an example, an exemplary case of the solid-line arrow to which the symbol 11.(2") is added is described. In this case, the arrow is solid, and hence the trajectory indicated thereby is that of the scanning by the first scanning portion 62. Further, the numeral 11. represents a trajectory of eleventh scanning by the first scanning portion 62. Still further, (2") represents that the image-capturing angle of the first line camera 67 of the first scanning portion 62 has been set to the second image-capturing angle (60°) with respect to the second lateral side 5b, and that the irradiation angle of the first light-emitting portion 68 of the first scanning portion 62 has been set to the second irradiation angle (60°) with respect to the second lateral side 5b.

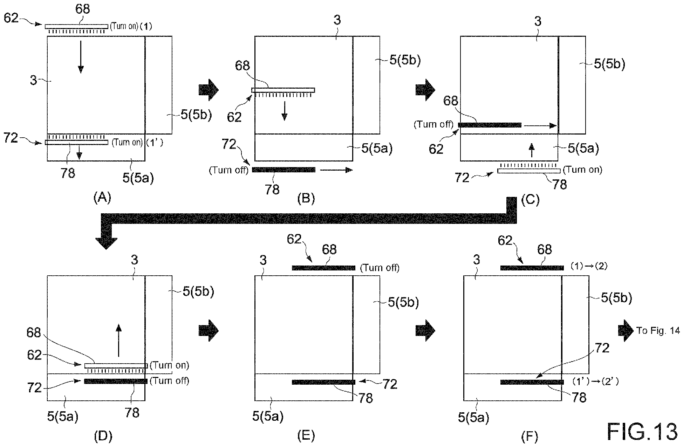

In Fig. 12, "top," "bottom," "left," and "right" are shown on each of the front side 3, the first lateral side 5a, and the second lateral side 5b. The description with reference to Fig. 12 is made on a premise that the terms "top," "bottom," "left," and "right" for each of the front side 3, the first lateral side 5a, and the second lateral side 5b represent directions shown in Fig. 12. (The same applies to Fig. 13 to Fig. 19 in the following description.)

Note that, a top-and-bottom direction and a right-and-left-hand direction of the front side 3 refer to directions orthogonal to each other in a horizontal plane in an earth coordinate system. Meanwhile, a top-and-bottom direction of each of the first lateral side 5a and the second lateral side 5b refers to a top-and-bottom direction in the earth coordinate system, and a right-and-left-hand direction of each of the first lateral side 5a and the second lateral side 5b refers to a direction in a horizontal plane in the earth coordinate system.

As shown in Fig. 12, the scanning with respect to the front side 3 of the workpiece 1 is performed by the first scanning portion 62 (refer to the solid-line arrows on the front side 3), and the scanning with respect to the first lateral side 5a of the workpiece 1 is performed by the second scanning portion 72 (refer to the broken-line arrows on the first lateral side 5a). Meanwhile, the second lateral side 5b is scanned by the first scanning portion 62 and the second scanning portion 72 sharing tasks and working cooperatively (refer to the solid-line arrows and the broken-line arrows on the second lateral side 5b) .

In this embodiment, the same area in the workpiece 1 is scanned a plurality of times at the different image-capturing angles (first image-capturing angle and second image-capturing angle) and the different irradiation angles (first irradiation angle and second irradiation angle). Note that, although the image-capturing angles and the irradiation angles are used in two patterns (refer to Fig. 7 and Fig. 8) in this embodiment, the image-capturing angles and the irradiation angles may be used in three or more patterns.

Specifically, as an example, as represented by 1.(1) and 4.(2), the same area on the front side 3 (left-hand side of the front side 3) is scanned twice at the different image-capturing angles and the different irradiation angles by the first scanning portion 62. In addition, specifically, as an example, as represented by "1"(1') and "4"(2'), the same area on the first lateral side 5a (left-hand side of the first lateral side 5a) is scanned twice at the different image-capturing angles and the different irradiation angles by the second scanning portion 72.

In addition, in this embodiment, the scanning direction in which the same areas in the workpiece 1 are each scanned the plurality of times includes different scanning directions (top-and-bottom direction and right-and-left-hand direction). Note that, although the two directions, specifically, the top-and-bottom direction and the right-and-left-hand direction are used as the scanning directions in this embodiment, three or more directions may be used as the scanning directions.

Note that, in the description of this embodiment, when the scanning direction is the top-and-bottom direction, both the top direction and the bottom direction are regarded as the same scanning directions. Similarly, when the scanning direction is the right-and-left-hand direction, both the right-hand direction and the left-hand direction are regarded as the same scanning directions.

For example, as represented by 1.(1), 2.(1), 3.(2), and 4.(2), the front side 3 of the workpiece 1 is scanned in the top-and-bottom direction by the first scanning portion 62. Meanwhile, as represented by 5.(1), 8.(1), 9.(2), and 12.(2), the front side 3 of the workpiece 1 is scanned in the right-and-left-hand direction by the first scanning portion 62. In addition, for example, as represented by "1"(1'), "2" (1'), "3" (2'), and "4" (2'), the first lateral side 5a of the workpiece 1 is scanned in the top-and-bottom direction by the second scanning portion 72. Meanwhile, as represented by "5"(1') and "6"(2'), the first lateral side 5a of the workpiece 1 is scanned in the right-and-left-hand direction by the second scanning portion 72.

Note that, in this embodiment, scanning directions on the second lateral side 5b are assigned respectively to the first scanning portion 62 and the second scanning portion 72. Specifically, the first scanning portion 62 performs scanning in the top-and-bottom direction of the second lateral side 5b (refer to 6. (1"), 7.(1"), 10.(2"), and 11.(2")), and the second scanning portion 72 performs scanning in the right-and-left-hand direction of the second lateral side 5b (refer to "7" (1") and "8" (2")).

In this context, a width in the right-and-left-hand direction and a width in the top-and-bottom direction of the front side 3, a width in the right-and-left-hand direction of the first lateral side 5a, and a width in the right-and-left-hand direction of the second lateral side 5b each exceed a width that can be scanned at once by the scanning portion 62 or 72. Thus, the scanning in the top-and-bottom direction and the scanning in the right-and-left-hand direction of the front side 3, the scanning in the top-and-bottom direction of the first lateral side 5a, and the scanning in the top-and-bottom direction of the second lateral side 5b are each performed twice in each of the same scanning directions. (The image-capturing angles and the irradiation angles need to be set different from each other, and hence the scanning is performed four times in total in the same scanning directions.)

Meanwhile, a width in the top-and-bottom direction of the first lateral side 5a, and a width in the top-and-bottom direction of the second lateral side 5b are each set equal to or smaller than the width that can be scanned at once by the scanning portion 62 or 72. Thus, neither the scanning in the right-and-left-hand direction of the first lateral side 5a nor the scanning in the right-and-left-hand direction of the second lateral side 5b needs to be performed twice in each of the same scanning directions. (The image-capturing angles and the irradiation angles need to be set different from each other, and hence the scanning is performed twice in total in the same scanning directions.)

Fig. 13 to Fig. 19 are each a view showing scanning movements of the first scanning portion 62 and the second scanning portion 72 in the first appearance-inspection device 50A. Note that, in Fig. 13 to Fig. 19, for the sake of better visibility, only the first light-emitting portion 68 of the first scanning portion 62 and the second light-emitting portion 78 of the second scanning portion 72 are shown, and the first line camera 67 and the second line camera 77 are not shown. In addition, the symbols (1), (2), (1'), (2'), (1"), and (2") used in Fig. 13 to Fig. 19 have the same meanings as those in Fig. 12.

As shown in (A) of Fig. 13, first, the control unit 53 controls the first arm portion 61 to move the first scanning portion 62 to a top-left position of the front side 3. (Note that, refer to Fig. 12 for the terms "top," "bottom," "left," and "right" for the front side 3.) Then, the control unit 53 sets the image-capturing angle of the first line camera 67 with respect to the front side 3 to the first image-capturing angle (90°), and sets the irradiation angle of the first light-emitting portion 68 with respect to the front side 3 to the first irradiation angle (30°).

At the same time, the control unit 53 controls the second arm portion 71 to move the second scanning portion 72 to a top-left position of the first lateral side 5a. (Note that, refer to Fig. 12 for the terms "top," "bottom," "left," and "right" for the first lateral side 5a.) Then, the control unit 53 sets the image-capturing angle of the second line camera 77 with respect to the first lateral side 5a to the first image-capturing angle (90°), and sets the irradiation angle of the second light-emitting portion 78 with respect to the first lateral side 5a to the first irradiation angle (30°).

Then, the control unit 53 turns on the first light-emitting portion 68 of the first scanning portion 62. Next, the control unit 53 performs image-capturing on the front side 3 of the workpiece 1 using the first line camera 67 of the first scanning portion 62, while moving, using the first arm portion 61, the first scanning portion 62 in the bottom direction (direction in the horizontal plane in the earth coordinate system) above the front side 3 of the workpiece 1. In this way, the left-hand side of the front side 3 of the workpiece 1 is scanned in the bottom direction at the first image-capturing angle and the first irradiation angle by the first scanning portion 62 (refer to 1.(1) in Fig. 12).

The control unit 53 turns on the first light-emitting portion 68, and at the same time, turns on the second light-emitting portion 78 of the second scanning portion 72. Then, the control unit 53 performs image-capturing on the first lateral side 5a of the workpiece 1 using the second line camera 77 of the second scanning portion 72, while moving, using the second arm portion 71, the second scanning portion 72 in the bottom direction (corresponding also to bottom direction in the earth coordinate system) above the first lateral side 5a of the workpiece 1. In this way, the left-hand side of the first lateral side 5a of the workpiece 1 is scanned in the bottom direction at the first image-capturing angle and the first irradiation angle by the second scanning portion 72 (refer to "1"(1') in Fig. 12) .

As shown in (B) of Fig. 13, when the second scanning portion 72 reaches a bottom-left position of the first lateral side 5a, the control unit 53 stops the movement in the bottom direction of the second scanning portion 72. Then, the control unit 53 stops the image-capturing performed using the second line camera 77 of the second scanning portion 72, and turns off the second light-emitting portion 78 of the second scanning portion 72. At this time point, the first scanning portion 62 has still been scanning the front side 3 of the workpiece 1. Next, the control unit 53 controls the second arm portion 71 to move the second scanning portion 72 in the right-hand direction.

As shown in (C) of Fig. 13, when the second scanning portion 72 reaches a bottom-right position of the first lateral side 5a, the control unit 53 stops the movement in the right-hand direction of the second scanning portion 72. Then, the control unit 53 turns on the second light-emitting portion 78 of the second scanning portion 72.

Next, the control unit 53 performs image-capturing on the first lateral side 5a of the workpiece 1 using the second line camera 77 of the second scanning portion 72, while moving, using the second arm portion 71, the second scanning portion 72 in the top direction (corresponding also to top direction in the earth coordinate system) above the first lateral side 5a. In this way, a right-hand side of the first lateral side 5a of the workpiece 1 is scanned in the top direction at the first image-capturing angle and the first irradiation angle by the second scanning portion 72 (refer to "2"(1') in Fig. 12).

At a time point when the second scanning portion 72 reaches the bottom-right position of the first lateral side 5a, the first scanning portion 62 has reached a bottom-left position of the front side 3. When the first scanning portion 62 reaches the bottom-left position of the front side 3, the control unit 53 stops the movement in the bottom direction of the first scanning portion 62. Then, the control unit 53 stops the image-capturing performed using the first line camera 67 of the first scanning portion 62, and turns off the first light-emitting portion 68 of the first scanning portion 62. Next, the control unit 53 controls the first arm portion 61 to move the first scanning portion 62 in the right-hand direction.

As shown in (D) of Fig. 13, when the first scanning portion 62 reaches a bottom-right position of the front side 3, the control unit 53 stops the movement in the right-hand direction of the first scanning portion 62. Then, the control unit 53 turns on the first light-emitting portion 68 of the first scanning portion 62.

Then, the control unit 53 performs image-capturing on the front side 3 of the workpiece 1 using the first line camera 67 of the first scanning portion 62, while moving, using the first arm portion 61, the first scanning portion 62 in the top direction (direction in the horizontal plane in the earth coordinate system) above the front side 3. In this way, a right-hand side of the front side 3 of the workpiece 1 is scanned in the top direction at the first image-capturing angle and the first irradiation angle by the first scanning portion 62 (refer to 2.(1) in Fig. 12).

At a time point when the first scanning portion 62 reaches the bottom-right position of the front side 3, the second scanning portion 72 has reached a top-right position of the first lateral side 5a. When the second scanning portion 72 reaches the top-right position of the first lateral side 5a, the control unit 53 stops the movement in the top direction of the second scanning portion 72. Then, the control unit 53 stops the image-capturing performed using the second line camera 77 of the second scanning portion 72, and turns off the second light-emitting portion 78 of the second scanning portion 72. Next, the control unit 53 causes the second scanning portion 72 to wait at the top-right position of the first lateral side 5a.

As shown in (E) of Fig. 13, when the first scanning portion 62 reaches a top-right position of the front side 3, the control unit 53 stops the movement in the top direction of the first scanning portion 62. Then, the control unit 53 stops the image-capturing performed using the first line camera 67 of the first scanning portion 62, and turns off the first light-emitting portion 68 of the first scanning portion 62. At this time point, the second scanning portion 72 has still been waiting at the top-right position of the first lateral side 5a.

As shown in (F) of Fig. 13, next, the control unit 53 switches the image-capturing angle of the first line camera 67 from the first image-capturing angle (90°) with respect to the front side 3 to the second image-capturing angle (60°) with respect to the front side 3. In addition, the control unit 53 switches the irradiation angle of the first light-emitting portion 68 from the first irradiation angle (30°) with respect to the front side 3 to the second irradiation angle (60°) with respect to the front side 3.

At the same time, the control unit 53 switches the image-capturing angle of the second line camera 77 from the first image-capturing angle (90°) with respect to the first lateral side 5a to the second image-capturing angle (60°) with respect to the first lateral side 5a. In addition, the control unit 53 switches the irradiation angle of the second light-emitting portion 78 from the first irradiation angle (30°) with respect to the first lateral side 5a to the second irradiation angle (60°) with respect to the first lateral side 5a.

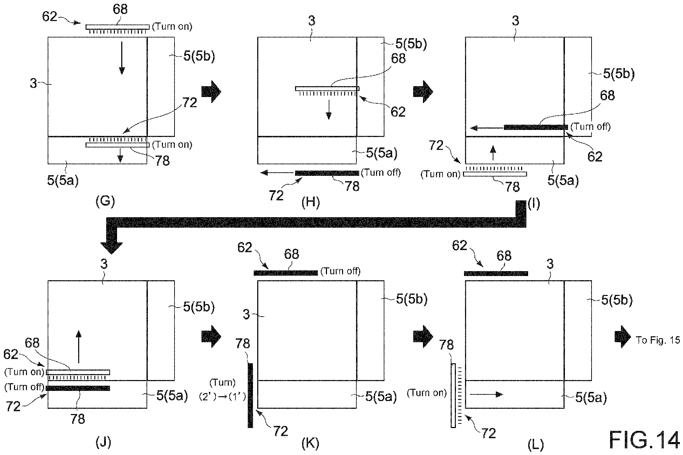

As shown in (G) of Fig. 14, then, the control unit 53 turns on the first light-emitting portion 68 of the first scanning portion 62. Next, the control unit 53 performs image-capturing on the front side 3 of the workpiece 1 using the first line camera 67 of the first scanning portion 62, while moving, using the first arm portion 61, the first scanning portion 62 in the bottom direction (direction in the horizontal plane in the earth coordinate system) above the front side 3 of the workpiece 1. In this way, the right-hand side of the front side 3 of the workpiece 1 is scanned in the bottom direction at the second image-capturing angle and the second irradiation angle by the first scanning portion 62 (refer to 3.(2) in Fig. 12).

The control unit 53 turns on the first light-emitting portion 68, and at the same time, turns on the second light-emitting portion 78 of the second scanning portion 72. Then, the control unit 53 performs image-capturing on the first lateral side 5a of the workpiece 1 using the second line camera 77 of the second scanning portion 72, while moving, using the second arm portion 71, the second scanning portion 72 in the bottom direction (corresponding also to bottom direction in the earth coordinate system) above the first lateral side 5a of the workpiece 1. In this way, the right-hand side of the first lateral side 5a of the workpiece 1 is scanned in the bottom direction at the second image-capturing angle and the second irradiation angle by the second scanning portion 72 (refer to "3"(2') in Fig. 12) .

As shown in (H) of Fig. 14, when the second scanning portion 72 reaches the bottom-right position of the first lateral side 5a, the control unit 53 stops the movement in the bottom direction of the second scanning portion 72. Then, the control unit 53 stops the image-capturing performed using the second line camera 77 of the second scanning portion 72, and turns off the second light-emitting portion 78 of the second scanning portion 72. At this time point, the first scanning portion 62 has still been scanning the front side 3 of the workpiece 1. Next, the control unit 53 controls the second arm portion 71 to move the second scanning portion 72 in the left-hand direction.

As shown in (I) of Fig. 14, when the second scanning portion 72 reaches the bottom-left position of the first lateral side 5a, the control unit 53 stops the movement in the left-hand direction of the second scanning portion 72. Then, the control unit 53 turns on the second light-emitting portion 78 of the second scanning portion 72.

Next, the control unit 53 performs image-capturing on the first lateral side 5a of the workpiece 1 using the second line camera 77 of the second scanning portion 72, while moving, using the second arm portion 71, the second scanning portion 72 in the top direction (corresponding also to top direction in the earth coordinate system) above the first lateral side 5a. In this way, the left-hand side of the first lateral side 5a of the workpiece 1 is scanned in the top direction at the second image-capturing angle and the second irradiation angle by the second scanning portion 72 (refer to "4"(2') in Fig. 12).

At a time point when the second scanning portion 72 reaches the bottom-left position of the first lateral side 5a, the first scanning portion 62 has reached the bottom-right position of the front side 3. When the first scanning portion 62 reaches the bottom-right position of the front side 3, the control unit 53 stops the movement in the bottom direction of the first scanning portion 62. Then, the control unit 53 stops the image-capturing performed using the first line camera 67 of the first scanning portion 62, and turns off the first light-emitting portion 68 of the first scanning portion 62. Next, the control unit 53 controls the first arm portion 61 to move the first scanning portion 62 in the left-hand direction.

As shown in (J) of Fig. 14, when the first scanning portion 62 reaches the bottom-left position of the front side 3, the control unit 53 stops the movement in the left-hand direction of the first scanning portion 62. Then, the control unit 53 turns on the first light-emitting portion 68 of the first scanning portion 62.

Next, the control unit 53 performs image-capturing on the front side 3 of the workpiece 1 using the first line camera 67 of the first scanning portion 62, while moving, using the first arm portion 61, the first scanning portion 62 in the top direction (direction in the horizontal plane in the earth coordinate system) above the front side 3. In this way, the left-hand side of the front side 3 of the workpiece 1 is scanned in the top direction at the second image-capturing angle and the second irradiation angle by the first scanning portion 62 (refer to 4.(2) in Fig. 12).

At a time point when the first scanning portion 62 reaches the bottom-left position of the front side 3, the second scanning portion 72 has reached the top-left position of the first lateral side 5a. When the second scanning portion 72 reaches the top-left position of the first lateral side 5a, the control unit 53 stops the movement in the top direction of the second scanning portion 72. Then, the control unit 53 stops the image-capturing performed using the second line camera 77 of the second scanning portion 72, and turns off the second light-emitting portion 78 of the second scanning portion 72.

As shown in (K) of Fig. 14, next, the control unit 53 turns the second scanning portion 72 using the second arm portion 71, thereby locating the second scanning portion 72 on the left-hand side of the first lateral side 5a. In this way, the scanning direction of the second scanning portion 72 with respect to the second lateral side 5b is switched from the top-and-bottom direction to the right-and-left-hand direction.

Further, at this time, the control unit 53 switches the image-capturing angle of the second line camera 77 from the second image-capturing angle (60°) with respect to the first lateral side 5a to the first image-capturing angle (90°) with respect to the first lateral side 5a. Still further, the control unit 53 switches the irradiation angle of the second light-emitting portion 78 from the second irradiation angle (60°) with respect to the first lateral side 5a to the first irradiation angle (30°) with respect to the first lateral side 5a.

At a time point when the turning of the second scanning portion 72 and the switching of the image-capturing angle and the irradiation angle of the second scanning portion 72 are completed, the first scanning portion 62 has reached the top-left position of the front side 3. When the first scanning portion 62 reaches the top-left position of the front side 3, the control unit 53 stops the movement in the top direction of the first scanning portion 62. Then, the control unit 53 stops the image-capturing performed using the first line camera 67 of the first scanning portion 62, and turns off the first light-emitting portion 68 of the first scanning portion 62.

As shown in (L) of Fig. 14, when the turning of the second scanning portion 72 and the switching of the image-capturing angle and the irradiation angle of the second scanning portion 72 are completed, the control unit 53 turns on the second light-emitting portion 78 of the second scanning portion 72. Then, the control unit 53 performs image-capturing on the first lateral side 5a of the workpiece 1 using the second line camera 77 of the second scanning portion 72, while moving, using the second arm portion 71, the second scanning portion 72 in the right-hand direction above the first lateral side 5a of the workpiece 1. In this way, the first lateral side 5a of the workpiece 1 is scanned in the right-hand direction at the first image-capturing angle and the first irradiation angle by the second scanning portion 72 (refer to "5"(1') in Fig. 12) .

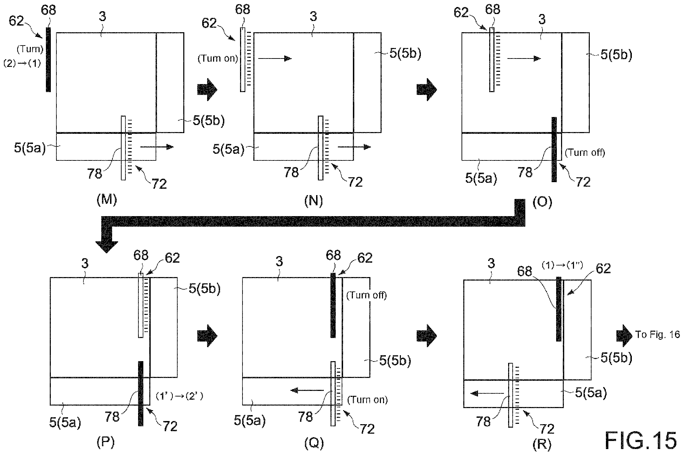

As shown in (M) of Fig. 15, while the second scanning portion 72 is scanning the first lateral side 5a in the right-hand direction, the control unit 53 turns the first scanning portion 62 using the first arm portion 61, thereby locating the first scanning portion 62 at the top left of the first lateral side 5a. In this way, the scanning direction of the first scanning portion 62 with respect to the front side 3 is switched from the top-and-bottom direction to the right-and-left-hand direction.

Further, at this time, the control unit 53 switches the image-capturing angle of the first line camera 67 from the second image-capturing angle (60°) with respect to the front side 3 to the first image-capturing angle (90°) with respect to the front side 3. Still further, the control unit 53 switches the irradiation angle of the first light-emitting portion 68 from the second irradiation angle (60°) with respect to the front side 3 to the first irradiation angle (30°) with respect to the front side 3.

At a time point when the turning of the first scanning portion 62 and the switching of the image-capturing angle and the irradiation angle of the first scanning portion 62 are completed, the second scanning portion 72 has still been scanning the first lateral side 5a in the right-hand direction.

As shown in (N) of Fig. 15, when the turning of the first scanning portion 62 and the switching of the image-capturing angle and the irradiation angle of the first scanning portion 62 are completed, the control unit 53 turns on the first light-emitting portion 68 of the first scanning portion 62. Then, the control unit 53 performs image-capturing on the front side 3 of the workpiece 1 using the first line camera 67 of the first scanning portion 62, while moving, using the first arm portion 61, the first scanning portion 62 in the right-hand direction above the front side 3 of the workpiece 1. In this way, a top side of the front side 3 of the workpiece 1 is scanned in the right-hand direction at the first image-capturing angle and the first irradiation angle by the first scanning portion 62 (refer to 5.(1) in Fig. 12).

As shown in (O) of Fig. 15, when the second scanning portion 72 reaches a position on the right-hand side of the first lateral side 5a, the control unit 53 stops the movement in the right-hand direction of the second scanning portion 72. Then, the control unit 53 stops the image-capturing performed using the second line camera 77 of the second scanning portion 72, and turns off the second light-emitting portion 78 of the second scanning portion 72. At this time point, the first scanning portion 62 has still been scanning the front side 3 of the workpiece 1 in the right-hand direction.

As shown in (P) of Fig. 15, next, the control unit 53 switches the image-capturing angle of the second line camera 77 from the first image-capturing angle (90°) with respect to the first lateral side 5a to the second image-capturing angle (60°) with respect to the first lateral side 5a. In addition, the control unit 53 switches the irradiation angle of the second light-emitting portion 78 from the first irradiation angle (30°) with respect to the first lateral side 5a to the second irradiation angle (60°) with respect to the first lateral side 5a.

At a time point when the switching of the image-capturing angle and the irradiation angle of the second scanning portion 72 is completed, the first scanning portion 62 has reached the top-right position of the front side 3.

As shown in (Q) of Fig. 15, when the first scanning portion 62 reaches the top-right position of the front side 3, the control unit 53 stops the movement in the right-hand direction of the first scanning portion 62. Then, the control unit 53 stops the capturing by the first line camera 67 of the first scanning portion 62, and turns off the first light-emitting portion 68 of the first scanning portion 62.

At this time, the control unit 53 turns on the second light-emitting portion 78 of the second scanning portion 72. Then, the control unit 53 performs image-capturing on the first lateral side 5a of the workpiece 1 using the second line camera 77 of the second scanning portion 72, while moving, using the second arm portion 71, the second scanning portion 72 in the left-hand direction above the first lateral side 5a of the workpiece 1. In this way, the first lateral side 5a of the workpiece 1 is scanned in the left-hand direction at the second image-capturing angle and the second irradiation angle by the second scanning portion 72 (refer to "6"(2') in Fig. 12).

As shown in (R) of Fig. 15, while the second scanning portion 72 is scanning the first lateral side 5a in the left-hand direction, the control unit 53 switches the image-capturing angle of the first line camera 67 from the first image-capturing angle (90°) with respect to the front side 3 to the first image-capturing angle (90°) with respect to the second lateral side 5b. In addition, the control unit 53 switches the irradiation angle of the first light-emitting portion 68 from the first irradiation angle (30°) with respect to the front side 3 to the first irradiation angle (30°) with respect to the second lateral side 5b. At this time, the first scanning portion 62 is located at the top-right position relative to the second lateral side 5b (refer to Fig. 12 for the terms "top," "bottom," "left," and "right" for the second lateral side 5b).

At a time point when the switching of the image-capturing angle and the irradiation angle of the first scanning portion 62 is completed, the second scanning portion 72 has still been scanning the first lateral side 5a in the left-hand direction.

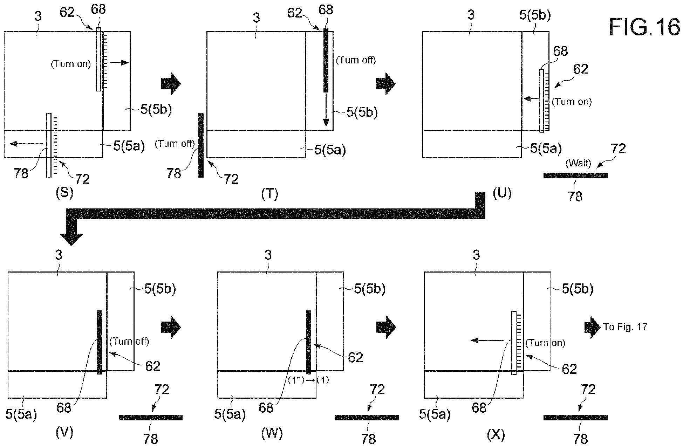

As shown in (S) of Fig. 16, when the switching of the image-capturing angle and the irradiation angle of the first scanning portion 62 is completed, the control unit 53 turns on the first light-emitting portion 68 of the first scanning portion 62. Then, the control unit 53 performs image-capturing on the second lateral side 5b of the workpiece 1 using the first line camera 67 of the first scanning portion 62, while moving, using the first arm portion 61, the first scanning portion 62 in the bottom direction (corresponding also to bottom direction in the earth coordinate system) above the second lateral side 5b of the workpiece 1. In this way, a right-hand side of the second lateral side 5b of the workpiece 1 is scanned in the bottom direction at the first image-capturing angle and the first irradiation angle by the first scanning portion 62 (refer to 6.(1") in Fig. 12).

As shown in (T) of Fig. 16, when the first scanning portion 62 reaches a bottom-right position of the second lateral side 5b, the control unit 53 stops the movement in the bottom direction of the first scanning portion 62. Then, the control unit 53 stops the image-capturing performed using the first line camera 67 of the first scanning portion 62, and turns off the first light-emitting portion 68 of the first scanning portion 62. Next, the control unit 53 controls the first arm portion 61 to move the first scanning portion 62 in the left-hand direction of the second lateral side 5b.

At a time point when the first scanning portion 62 reaches the bottom-right position of the second lateral side 5b, the second scanning portion 72 has reached a position on the left-hand side of the first lateral side 5a of the workpiece 1. When the second scanning portion 72 reaches the position on the left-hand side of the first lateral side 5a, the control unit 53 stops the movement in the left-hand direction of the second scanning portion 72. Then, the control unit 53 stops the image-capturing performed using the second line camera 77 of the second scanning portion 72, and turns off the second light-emitting portion 78 of the second scanning portion 72.

As shown in (U) of Fig. 16, when the first scanning portion 62 reaches a bottom-left position of the second lateral side 5b, the control unit 53 stops the movement in the left-hand direction of the first scanning portion 62. Then, the control unit 53 turns on the first light-emitting portion 68 of the first scanning portion 62.

Next, the control unit 53 performs image-capturing on the second lateral side 5b of the workpiece 1 using the first line camera 67 of the first scanning portion 62, while moving, using the first arm portion 61, the first scanning portion 62 in the top direction (corresponding also to top direction in the earth coordinate system) above the second lateral side 5b. In this way, a left-hand side of the second lateral side 5b of the workpiece 1 is scanned in the top direction at the first image-capturing angle and the first irradiation angle by the first scanning portion 62 (refer to 7.(1") in Fig. 12).

Note that, at this time, the control unit 53 moves the second scanning portion 72 to a waiting position using the second arm portion 71, thereby bringing the second scanning portion 72 into a waiting mode.

As shown in (V) of Fig. 16, when the first scanning portion 62 reaches a top-left position of the second lateral side 5b, the control unit 53 stops the movement in the top direction of the first scanning portion 62. Then, the control unit 53 stops the image-capturing performed using the first line camera 67 of the first scanning portion 62, and turns off the first light-emitting portion 68 of the first scanning portion 62.

As shown in (W) of Fig. 16, next, the control unit 53 switches the image-capturing angle of the first line camera 67 from the first image-capturing angle (90°) with respect to the second lateral side 5b to the first image-capturing angle (90°) with respect to the front side 3. In addition, the control unit 53 switches the irradiation angle of the first light-emitting portion 68 from the first irradiation angle (60°) with respect to the second lateral side 5b to the first irradiation angle (60°) with respect to the front side 3. At this time, the first scanning portion 62 is located at the bottom-right position relative to the front side 3 (refer to Fig. 12 for the terms "top," "bottom," "left," and "right" for the front side 3).

As shown in (X) of Fig. 16, when the switching of the image-capturing angle and the irradiation angle of the first scanning portion 62 is completed, the control unit 53 turns on the first light-emitting portion 68 of the first scanning portion 62. Then, the control unit 53 performs image-capturing on the front side 3 of the workpiece 1 using the first line camera 67 of the first scanning portion 62, while moving, using the first arm portion 61, the first scanning portion 62 in the left-hand direction above the front side 3 of the workpiece 1. In this way, a bottom side of the front side 3 of the workpiece 1 is scanned in the left-hand direction at the first image-capturing angle and the first irradiation angle by the first scanning portion 62 (refer to 8.(1) in Fig. 12).

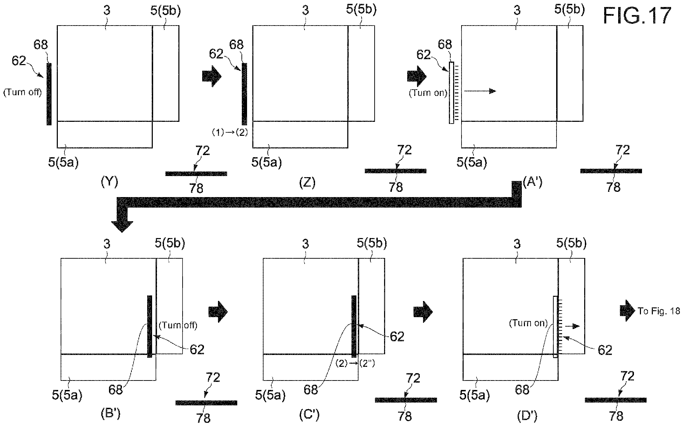

As shown in (Y) of Fig. 17, when the first scanning portion 62 reaches the bottom-left position of the front side 3, the control unit 53 stops the movement in the left-hand direction of the first scanning portion 62. Then, the control unit 53 stops the image-capturing performed using the first line camera 67 of the first scanning portion 62, and turns off the first light-emitting portion 68 of the first scanning portion 62.

As shown in (Z) of Fig. 17, next, the control unit 53 switches the image-capturing angle of the first line camera 67 from the first image-capturing angle (90°) with respect to the front side 3 to the second image-capturing angle (60°) with respect to the front side 3. In addition, the control unit 53 switches the irradiation angle of the first light-emitting portion 68 from the first irradiation angle (30°) with respect to the front side 3 to the second irradiation angle (60°) with respect to the front side 3.

As shown in (A') of Fig. 17, next, the control unit 53 turns on the first light-emitting portion 68 of the first scanning portion 62. Then, the control unit 53 performs image-capturing on the front side 3 of the workpiece 1 using the first line camera 67 of the first scanning portion 62, while moving, using the first arm portion 61, the first scanning portion 62 in the right-hand direction above the front side 3 of the workpiece 1. In this way, the bottom side of the front side 3 of the workpiece 1 is scanned in the right-hand direction at the second image-capturing angle and the second irradiation angle by the first scanning portion 62 (refer to 9.(2) in Fig. 12).

As shown in (B') of Fig. 17, when the first scanning portion 62 reaches the bottom-right position of the front side 3, the control unit 53 stops the movement in the right-hand direction of the first scanning portion 62. Then, the control unit 53 stops the image-capturing performed using the first line camera 67 of the first scanning portion 62, and turns off the first light-emitting portion 68 of the first scanning portion 62.

As shown in (C') of Fig. 17, next, the control unit 53 switches the image-capturing angle of the first line camera 67 from the second image-capturing angle (60°) with respect to the front side 3 to the second image-capturing angle (60°) with respect to the second lateral side 5b. In addition, the control unit 53 switches the irradiation angle of the first light-emitting portion 68 from the second irradiation angle (60°) with respect to the front side 3 to the second irradiation angle (60°) with respect to the second lateral side 5b. At this time, the first scanning portion 62 is located at the top-left position relative to the second lateral side 5b (refer to Fig. 12 for the terms "top," "bottom," "left," and "right" for the second lateral side 5b).

As shown in (D') of Fig. 17, next, the control unit 53 turns on the first light-emitting portion 68 of the first scanning portion 62. Then, the control unit 53 performs image-capturing on the second lateral side 5b of the workpiece 1 using the first line camera 67 of the first scanning portion 62, while moving, using the first arm portion 61, the first scanning portion 62 in the bottom direction (corresponding also to bottom direction in the earth coordinate system) above the second lateral side 5b of the workpiece 1. In this way, the left-hand side of the second lateral side 5b of the workpiece 1 is scanned in the bottom direction at the second image-capturing angle and the second irradiation angle by the first scanning portion 62 (refer to 10.(2") in Fig. 12).

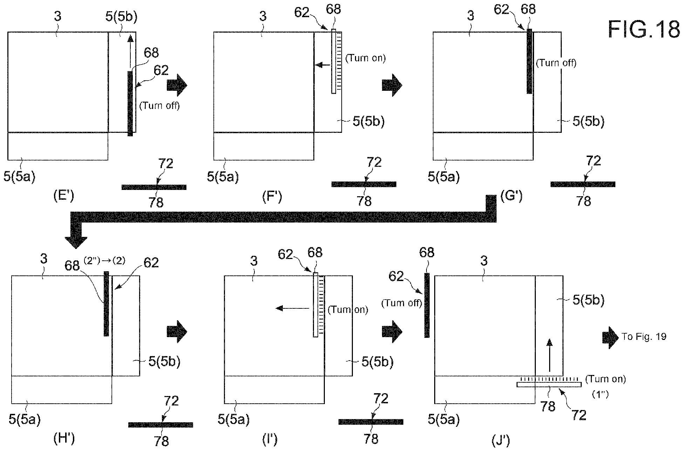

As shown in (E') of Fig. 18, when the first scanning portion 62 reaches the bottom-left position of the second lateral side 5b, the control unit 53 stops the movement in the bottom direction of the first scanning portion 62. Then, the control unit 53 stops the image-capturing performed using the first line camera 67 of the first scanning portion 62, and turns off the first light-emitting portion 68 of the first scanning portion 62. Next, the control unit 53 controls the first arm portion 61 to move the first scanning portion 62 in the right-hand direction of the second lateral side 5b.

As shown in (F') of Fig. 18, when the first scanning portion 62 reaches the bottom-right position of the second lateral side 5b, the control unit 53 stops the movement in the right-hand direction of the first scanning portion 62. Then, the control unit 53 turns on the first light-emitting portion 68 of the first scanning portion 62.

Next, the control unit 53 performs image-capturing on the second lateral side 5b of the workpiece 1 using the first line camera 67 of the first scanning portion 62, while moving, using the first arm portion 61, the first scanning portion 62 in the top direction (corresponding also to top direction in the earth coordinate system) above the second lateral side 5b. In this way, the right-hand side of the first lateral side 5a of the workpiece 1 is scanned in the top direction at the second image-capturing angle and the second irradiation angle by the first scanning portion 62 (refer to 11.(2") in Fig. 12).

As shown in (G') of Fig. 18, when the first scanning portion 62 reaches the top-right position of the second lateral side 5b, the control unit 53 stops the movement in the top direction of the first scanning portion 62. Then, the control unit 53 stops the image-capturing performed using the first line camera 67 of the first scanning portion 62, and turns off the first light-emitting portion 68 of the first scanning portion 62.

As shown in (H') of Fig. 18, next, the control unit 53 switches the image-capturing angle of the first line camera 67 from the second image-capturing angle (60°) with respect to the second lateral side 5b to the second image-capturing angle (60°) with respect to the front side 3. In addition, the control unit 53 switches the irradiation angle of the first light-emitting portion 68 from the second irradiation angle (60°) with respect to the second lateral side 5b to the second irradiation angle (60°) with respect to the front side 3. At this time, the first scanning portion 62 is located at the top-right position relative to the front side 3 (refer to Fig. 12 for the terms "top," "bottom," "left," and "right" for the front side 3).

As shown in (I') of Fig. 18, next, the control unit 53 turns on the first light-emitting portion 68 of the first scanning portion 62. Then, the control unit 53 performs image-capturing on the front side 3 of the workpiece 1 using the first line camera 67 of the first scanning portion 62, while moving, using the first arm portion 61, the first scanning portion 62 in the left-hand direction above the front side 3 of the workpiece 1. In this way, the top side of the front side 3 of the workpiece 1 is scanned in the left-hand direction at the second image-capturing angle and the second irradiation angle by the first scanning portion 62 (refer to 12.(2) in Fig. 12).

As shown in (J') of Fig. 18, when the first scanning portion 62 reaches the top-left position of the front side 3, the control unit 53 stops the movement in the left-hand direction of the first scanning portion 62. Then, the control unit 53 stops the image-capturing performed using the first line camera 67 of the first scanning portion 62, and turns off the first light-emitting portion 68 of the first scanning portion 62.

At this time, the control unit 53 controls the second arm portion 71 to locate the second scanning portion 72 to a position on the left-hand side of the second lateral side 5b (refer to Fig. 12 for the terms "top," "bottom," "left," and "right" for the second lateral side 5b). Then, the control unit 53 sets the image-capturing angle of the second line camera 77 to the first image-capturing angle (90°) with respect to the second lateral side 5b, and sets the irradiation angle of the second light-emitting portion 78 to the first irradiation angle (30°) with respect to the second lateral side 5b.

Next, the control unit 53 turns on the second light-emitting portion 78 of the second scanning portion 72. After that, the control unit 53 performs image-capturing on the second lateral side 5b of the workpiece 1 using the second line camera 77 of the second scanning portion 72, while moving, using the second arm portion 71, the second scanning portion 72 in the right-hand direction above the second lateral side 5b of the workpiece 1. In this way, the second lateral side 5b of the workpiece 1 is scanned in the right-hand direction at the first image-capturing angle and the first irradiation angle by the second scanning portion 72 (refer to "7"(1") in Fig. 12).

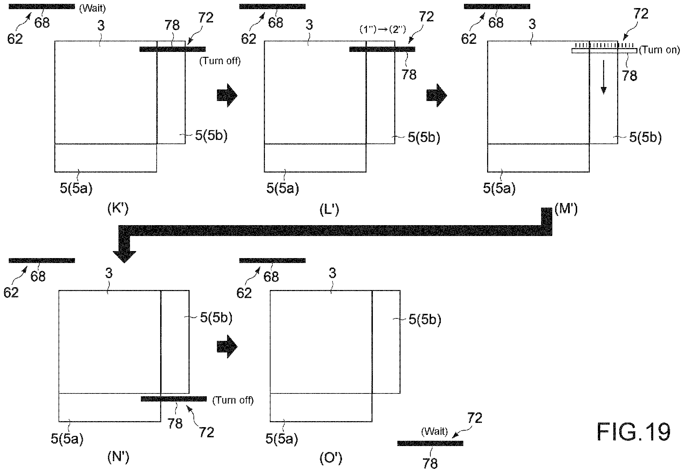

As shown in (K') of Fig. 19, when the second scanning portion 72 reaches a position on the right-hand side of the second lateral side 5b, the control unit 53 stops the movement in the right-hand direction of the second scanning portion 72. Then, the control unit 53 stops the image-capturing performed using the second line camera 77 of the second scanning portion 72, and turns off the second light-emitting portion 78 of the second scanning portion 72.

Note that, at this time, the control unit 53 moves the first scanning portion 62 to a waiting position using the first arm portion 61, thereby bringing the first scanning portion 62 into a waiting mode.

As shown in (L') of Fig. 19, next, the control unit 53 switches the image-capturing angle of the second line camera 77 from the first image-capturing angle (90°) with respect to the second lateral side 5b to the second image-capturing angle (60°) with respect to the second lateral side 5b. In addition, the control unit 53 switches the irradiation angle of the second light-emitting portion 78 from the first irradiation angle (30°) with respect to the second lateral side 5b to the second irradiation angle (60°) with respect to the second lateral side 5b.

As shown in (M') of Fig. 19, next, the control unit 53 turns on the second light-emitting portion 78 of the second scanning portion 72. After that, the control unit 53 performs image-capturing on the second lateral side 5b of the workpiece 1 using the second line camera 77 of the second scanning portion 72, while moving, using the second arm portion 71, the second scanning portion 72 in the left-hand direction above the second lateral side 5b of the workpiece 1. In this way, the second lateral side 5b of the workpiece 1 is scanned in the left-hand direction at the second image-capturing angle and the second irradiation angle by the second scanning portion 72 (refer to "8"(2") in Fig. 12).

As shown in (N') of Fig. 19, when the second scanning portion 72 reaches the position on the left-hand side of the second lateral side 5b, the control unit 53 stops the movement in the left-hand direction of the second scanning portion 72. Then, the control unit 53 stops the image-capturing performed using the second line camera 77 of the second scanning portion 72, and turns off the second light-emitting portion 78 of the second scanning portion 72.

As shown in (O') of Fig. 19, next, the control unit 53 moves the second scanning portion 72 to the waiting position using the second arm portion 71, thereby bringing the second scanning portion 72 into the waiting mode.

Note that, thereafter, the workpiece 1 is inverted upside down by the first transportation device 80, and then placed on the table 52 of the second appearance-inspection device 50B with the rear side 4 facing up. Then, by a procedure similar to the above-described procedure, the rear side 4, the third lateral side 5c, and the fourth lateral side 5d of the workpiece 1 are inspected by the second appearance-inspection device 50B.

### (Reasons for Inspecting Workpiece 1 by Movements Shown in Fig. 12 to Fig. 19)

Now, reasons for inspecting the workpiece 1 by the movements shown in Fig. 12 to Fig. 19 are described. At the time of inspecting the three sides with use of the first scanning portion 62 and the second scanning portion 72, the following (1) to (4) need to be taken into account.
(1) Completing the scanning of the three sides as early as possible with use of the first scanning portion 62 and the second scanning portion 72 (shortening inspection time period).
(2) Inspecting the appearance of the workpiece 1 as precisely as possible with use of the first scanning portion 62 and the second scanning portion 72.
(3) Preventing the first scanning portion 62 and the second scanning portion 72 from colliding against each other.
(4) Preventing the light from the first light-emitting portion 68 of the first scanning portion 62 from adversely affecting the image-capturing performed using the second line camera 77 of the second scanning portion 72, that is, preventing occurrence of interference of light, and similarly, preventing the light from the second light-emitting portion 78 of the second scanning portion 72 from adversely affecting the image-capturing performed using the first line camera 67 of the first scanning portion 62, that is, preventing occurrence of interference of light.

First, in order to shorten the inspection time period, the control unit 53 scans the first lateral side 5a of the workpiece 1 using the second scanning portion 72 while scanning the front side 3 of the workpiece 1 using the first scanning portion 62. In addition, in order to shorten the inspection time period, the control unit 53 causes the first scanning portion 62 and the second scanning portion 72 to share tasks and work cooperatively to scan the second lateral side 5b.

Note that, if the first scanning portion 62 and the second scanning portion 72 scan the second lateral side 5b simultaneously with each other, these two scanning portions 62 and 72 collide against each other. As a countermeasure, a timing at which the first scanning portion 62 scans the second lateral side 5b (refer to (S) of Fig. 16 to (V) of Fig. 16, and (D') of Fig. 17 to (G') of Fig. 18) and a timing at which the second scanning portion 72 scans the second lateral side 5b (refer to (J') of Fig. 18 to (N') of Fig. 19) are shifted from each other.

Further, in order to precisely inspect the appearance of the workpiece 1, the control unit 53 scans, using the first scanning portion 62, the front side 3 of the workpiece 1 the plurality of times at the different image-capturing angles and the different irradiation angles. Similarly, the control unit 53 scans, using the second scanning portion 72, the first lateral side 5a of the workpiece 1 the plurality of times at the different image-capturing angles and the different irradiation angles.

Still further, in order to precisely inspect the appearance of the workpiece 1, the control unit 53 scans, using the first scanning portion 62, the front side 3 of the workpiece 1 the plurality of times in the different scanning directions (top-and-bottom direction and right-and-left-hand direction). Similarly, the control unit 53 scans, using the second scanning portion 72, the first lateral side 5a of the workpiece 1 the plurality of times in the different scanning directions.

Note that, the scanning directions on the second lateral side 5b are assigned respectively to the first scanning portion 62 and the second scanning portion 72. Specifically, in this embodiment, the control unit 53 scans, using the first scanning portion 62, the second lateral side 5b in the top-and-bottom direction, and scans, using the second scanning portion 72, the second lateral side 5b in the right-and-left-hand direction.

In this context, description is made with focus on the movements of the first scanning portion 62 represented by 5.(1), 6.(1"), 7.(1"), and 8.(1) in Fig. 12 (corresponding to (N) of Fig. 15 to (Y) of Fig. 17). First, the first scanning portion 62 scans the top side of the front side 3 in the right-hand direction, and reaches the top-right position of the front side 3 (5.(1) in Fig. 12). The second lateral side 5b is present ahead of the top-right position of the front side 3, and the first scanning portion 62 scans the right-hand side of the first lateral side 5a in the bottom direction (6.(1") in Fig. 12) in series.

Then, the first scanning portion 62 scans the left-hand side of the second lateral side 5b in the top direction, and reaches the top-left position of the second lateral side 5b (7.(1") in Fig. 12). The front side 3 is present ahead of the top-left position of the second lateral side 5b, and the first scanning portion 62 scans the bottom side of the front side 3 in the left-hand direction (8.(1) in Fig. 12) in series.

Note that, in Fig. 12, the movements represented by 9.(2), 10.(2"), 11.(2"), and 12.(2) of the first scanning portion 62 are basically the same as those represented by 5.(1), 6.(1"), 7.(1"), and 8.(1) except the differences in image-capturing angle and irradiation angle.

In other words, in this embodiment, using the first scanning portion 62, the control unit 53 scans the front side 3 of the workpiece 1 in the right-and-left-hand direction and scans the first lateral side 5a of the workpiece 1 (side adjacent in the scanning direction to the front side 3) in the top-and-bottom direction in series. With this, the inspection time period is shortened.

Next, the interference of light is described. In this embodiment, the control unit 53 controls the scanning movements of the first scanning portion 62 and the second scanning portion 72 so as not to cause the interference of light.

Typically, the control unit 53 controls the movements of the first scanning portion 62 and the second scanning portion 72 so as to keep the first scanning portion 62 and the second scanning portion 72 away from each other as much as possible during the scanning.

This control is shown, for example, in (A) of Fig. 13, (G) of Fig. 14, (N) of Fig. 15, and (S) of Fig. 16. In (A) of Fig. 13 and (G) of Fig. 14, while the first scanning portion 62 is being moved in the bottom direction of the front side 3 of the workpiece 1, the second scanning portion 72 is being moved in the bottom direction of the first lateral side 5a of the workpiece 1. With this, an interval between the first scanning portion 62 and the second scanning portion 72 is kept, whereby the interference of light is prevented.

In (N) of Fig. 15, after the second scanning portion 72 has been advanced to some extent by being moved in the right-hand direction of the first lateral side 5a of the workpiece 1, the first scanning portion 62 starts to scan the front side 3 of the workpiece 1 in the right-hand direction. With this, the interval between the first scanning portion 62 and the second scanning portion 72 is kept, whereby the interference of light is prevented.

In (S) of Fig. 16, after the second scanning portion 72 has been advanced to some extent by being moved in the left-hand direction of the first lateral side 5a of the workpiece 1, the first scanning portion 62 starts to scan the second lateral side 5b of the workpiece 1 in the bottom direction. With this, the interval between the first scanning portion 62 and the second scanning portion 72 is increased, whereby the interference of light is prevented.

In addition, when the interval between the first scanning portion 62 and the second scanning portion 72 is equal to or smaller than a certain interval, the control unit 53 controls timings of turning on and off the first light-emitting portion 68 and the second light-emitting portion 78, and timings of starting and ending the image-capturing performed using the first line camera 67 and the second line camera 77 (timings of starting and ending the scanning).

This control is shown, for example, in (C) of Fig. 13, (D) of Fig. 13, (I) of Fig. 14, (J) of Fig. 14, and (Q) of Fig. 15.

In (C) of Fig. 13 and (I) of Fig. 14, the interval between the first scanning portion 62 and the second scanning portion 72 is equal to or smaller than the certain interval. Meanwhile, at the timing when the first scanning portion 62 reaches the bottom side of the front side 3, when the image-capturing performed using the first line camera 67 is ended, and then when the first light-emitting portion 68 is turned off, the second light-emitting portion 78 is turned on, and the image-capturing performed using the second line camera 77 is started. With this, the interference of light is prevented.

Similarly, also in (D) of Fig. 13 and (J) of Fig. 14, the interval between the first scanning portion 62 and the second scanning portion 72 is equal to or smaller than the certain interval. Meanwhile, at the timing when the second scanning portion 72 reaches the top side of the first lateral side 5a, when the image-capturing performed using the second line camera 77 is ended, and then when the second light-emitting portion 78 is turned off, the first light-emitting portion 68 is turned on, and the image-capturing performed using the first line camera 67 is started. With this, the interference of light is prevented.

Similarly, also in (Q) of Fig. 15, the interval between the first scanning portion 62 and the second scanning portion 72 is equal to or smaller than the certain interval. Meanwhile, at the timing when the first scanning portion 62 reaches the right-hand side of the front side 3, when the image-capturing performed using the first line camera 67 is ended, and then when the first light-emitting portion 68 is turned off, the second light-emitting portion 78 is turned on, and the image-capturing performed using the second line camera 77 is started. With this, the interference of light is prevented.

In this context, as shown in (L) of Fig. 14 to (T) of Fig. 16, the second scanning portion 72 scans the first lateral side 5a in a state in which the second light-emitting portion 78 is held in an upright posture (state in which a longitudinal direction of the first light-emitting portion 68 aligns with the top-and-bottom direction of the earth coordinate system). In addition, as shown in (J') of Fig. 18 to (N') of Fig. 19, the second scanning portion 72 scans the second lateral side 5b in the state in which the second light-emitting portion 78 is held in the upright posture.

Meanwhile, the width in the top-and-bottom direction of each of the first lateral side 5a and the second lateral side 5b is smaller than a length of the second light-emitting portion 78. Thus, intensity of light that leaks to the front side 3 at the time when the lateral side 5 is irradiated with light in the state in which the second light-emitting portion 78 is held in the upright posture is higher than that at a time when the lateral side 5 is irradiated with light in a state in which the second light-emitting portion 78 is held in a lying posture (state in which the longitudinal direction of the second light-emitting portion 78 aligns with the horizontal direction in the earth coordinate system).

In other words, in the state in which the second light-emitting portion 78 is held in the upright posture, the interference of light being the adverse effect by the second light-emitting portion 78 of the second scanning portion 72 on the image-capturing performed using the first line camera 67 of the first scanning portion 62 is more liable to occur than in the state in which the second light-emitting portion 78 is held in the lying posture.

As a countermeasure, basically, as shown in (J') of Fig. 18 to (N') of Fig. 19, while the second scanning portion 72 is scanning the lateral side 5 in the state in which the second light-emitting portion 78 is held in the upright posture, the first scanning portion 62 does not scan the front side 3. Alternatively, (L) of Fig. 14 to (O) of Fig. 15, even while the second scanning portion 72 is scanning the lateral side 5 in the state in which the second light-emitting portion 78 is held in the upright posture, the first scanning portion 62 may scan the front side 3. However, in this case, at least, the interval between the first scanning portion 62 and the second scanning portion 72 is kept equal to or larger than the certain interval.

Note that, the second light-emitting portion 78 may be configured to be partially turned on. In this case, in the state in which the second light-emitting portion 78 is held in the upright posture, a part corresponding to the width in the top-and-bottom direction of the lateral side 5 is partially turned on, and other parts are turned off. With this, the interference of light is prevented.

Alternatively, the first light-emitting portion 68 and the second light-emitting portion 78 may be configured to be capable of emitting light in different wavelength bands. Also by such methods, the interference of light can be prevented.

### <Functions, Etc.>

### [Noise Inspection Device 10]

As described above, in the noise inspection device 10 according to this embodiment, the hand portion 31 in a state of holding the workpiece 1 is moved by the arm portion 21 to transport the workpiece 1, and the sound from the workpiece 1 is detected by the sound detection portion 35 during the transportation of the workpiece 1. Then, the workpiece 1 is inspected for the noise generated therefrom on the basis of the signal of the detected sound.

In other words, the noise inspection device 10 according to this embodiment has both a function of the transportation device that transports the workpiece 1, and a function of the noise inspection device that inspects the workpiece 1 for the noise generated therefrom. Thus, this noise inspection device 10 is capable of inspecting the workpiece 1 for the noise during the transportation of the workpiece 1. In this way, the workpiece 1 can be efficiently inspected for the noise. In addition, cost of the noise inspection device 10 according to this embodiment can be reduced to be lower than that in a case where the transportation devices and the noise inspection device are prepared independent of each other.

Further, in the noise inspection device 10 according to this embodiment, the workpiece 1 is transported to the label application device 40 by moving clockwise the hand portion 31 in a state of holding the workpiece 1. Meanwhile, the workpiece 1 is transported from the label application device 40 to the first appearance-inspection device 50A by moving counterclockwise the hand portion 31 in a state of holding the workpiece 1.

Then, the sound generated from the workpiece 1 due to the clockwise movement of the workpiece 1, and the sound generated from the workpiece 1 due to the counterclockwise movement of the workpiece 1 are detected by the sound detection portion 35. The workpiece 1 is inspected for the noise generated therefrom on the basis of the signal of the detected sound.

By transporting the workpiece 1 clockwise and counterclockwise and inspecting the workpiece 1 for the noise generated therefrom on the basis of the sound generated from the workpiece 1 during the transportation in such a way, the noise inspection can be properly performed. Note that, the directions in which the workpiece 1 is moved may be, for example, the top direction and the bottom direction in the earth coordinate system.

Still further, in the noise inspection device 10 according to this embodiment, at the time when the workpiece 1 is transported to the label application device 40, the posture of the workpiece 1 (posture of the hand portion 31) is changed such that the label application device 40 can execute the process on the workpiece 1. Similarly, at the time when the workpiece 1 is transported from the label application device 40 to the first appearance-inspection device 50A, the posture of the workpiece 1 (posture of the hand portion 31) is changed such the workpiece 1 is placed on the table 52 of the first appearance-inspection device 50A.

Then, the sound generated due to the change in a posture of the workpiece 1 is detected by the sound detection portion 35. The workpiece 1 is inspected for the noise generated therefrom on the basis of the signal of the detected sound.

By changing the posture of the workpiece 1 during the transportation of the workpiece 1 and inspecting the workpiece 1 for the noise generated therefrom on the basis of the sound generated from the workpiece 1 during the transportation in such a way, the noise inspection can be properly performed.

Yet further, in the noise inspection device 10 according to this embodiment, the sound detection portion 35 is provided to the hand portion 31. With this, the sound generated from the workpiece 1 during the transportation of the workpiece 1 can be properly detected. Note that, the sound detection portion 35 may be provided to other parts (such as the arm portion 21) of the robot-arm portion 12.

Yet further, in the noise inspection device 10 according to this embodiment, the sound detection portion 35 is configured to detect the sound in contact with the workpiece 1, and this sound detection portion 35 includes the AE sensor. With this, the noise generated from the workpiece 1 can be further properly detected.

Note that, the sound detection portion 35 may be configured to detect the sound without being in contact with the workpiece 1. In this case, the sound detection portion 35 may include a microphone. Also when the sound detection portion 35 is configured in such a way, the noise generated from the workpiece 1 can be properly detected.

Note that, a frequency band of the noise to be detected may be the same as a frequency band of ambient environmental sound. In this case, the sound detection portion 35 of the type of detecting the sound without being in contact with the workpiece 1 may fail to properly detect the noise due to the ambient environmental sound. Thus, in such a case, for example, the sound detection portion 35 of the type of detecting the sound in contact with the workpiece 1 may be used.

Yet further, in the noise inspection device 10, on the basis of the signal in the specific frequency band (frequency band corresponding to the noise) in the signal of the sound detected by the sound detection portion 35, the workpiece 1 is inspected for the noise generated therefrom. With this, the noise inspection can be properly performed.

Yet further, in the noise inspection device 10 according to this embodiment, the signal in the specific frequency band (frequency band corresponding to the noise) is integrated by the noise inspection device 10, and the workpiece 1 is inspected for the noise generated therefrom on the basis of a value obtained by the integration. With this, average volume of the noise can be determined in the frequency band corresponding to the noise. Thus, the noise inspection can be further properly performed.

### [Appearance Inspection Device 50]

In the appearance inspection device 50 according to this embodiment, while the first scanning portion 62 is scanning the front side 3 (rear side 4) of the workpiece, the second scanning portion 72 scans the first lateral side 5a (third lateral side 5c) at the same time. In this way, the appearance inspection device according to this embodiment can efficiently and quickly complete the appearance inspection of the workpiece 1.

In this context, the appearance inspection has a problem of a liability of taking a longer time period than those in the other steps on the production line, which causes a problem of difficulties in balancing a takt time period with those in the other steps. Such problems are liable to occur particularly when the workpiece 1 is the stationary game device having a large area to be inspected. Meanwhile, in this embodiment, the inspection time period in the appearance inspection can be shortened, and hence the tact time period can be easily balanced with those in the other steps.

Further, in this embodiment, since the appearance inspection devices 50 each include the two robot-arm portions 60 and 70, the number of the appearance inspection devices 50 can be reduced to be smaller than that in a case where, for example, the appearance inspection devices 50 each include a single robot-arm portion. With this, cost reduction can be achieved. In addition, an installation space for the inspection system 100 can be reduced, and hence a degree of freedom in space management of a production area is increased.

Still further, in the appearance inspection device 50 according to this embodiment, the first scanning portion 62 includes the first light-emitting portion 68, and the second scanning portion 72 includes the second light-emitting portion 78.

With this, light can be properly irradiated onto the portions on which the first line camera 67 and the second line camera 77 perform image-capturing.

Yet further, in the appearance inspection device 50 according to this embodiment, in the first scanning portion 62, the image-capturing angle at which the first line camera 67 performs image-capturing on the front side 3 (rear side 4) of the workpiece 1 is adjusted, and the irradiation angle at which the first light-emitting portion 68 irradiates light onto the front side 3 (rear side 4) of the workpiece 1 is adjusted. Similarly, in the appearance inspection device 50 according to this embodiment, in the second scanning portion 72, the image-capturing angle at which the second line camera 77 performs image-capturing on the first lateral side 5a (third lateral side 5c) of the workpiece 1 is adjusted, and the irradiation angle at which the second light-emitting portion 78 irradiates light onto the first lateral side 5a (third lateral side 5c) of the workpiece 1 is adjusted.

With this, the appearance of the workpiece 1 can be precisely inspected.

Yet further, in the appearance inspection device 50 according to this embodiment, the first scanning portion 62 scans the front side 3 (rear side 4) of the workpiece 1 the plurality of times at the different image-capturing angles and the different irradiation angles. With this, the appearance of the workpiece 1 can be further precisely inspected.

Similarly, in the appearance inspection device 50 according to this embodiment, the second scanning portion 72 scans the first lateral side 5a (third lateral side 5c) of the workpiece 1 the plurality of times at the different image-capturing angles and the different irradiation angles. With this, the appearance of the workpiece 1 can be further precisely inspected.

Yet further, in the appearance inspection device 50 according to this embodiment, the first scanning portion 62 scans the front side 3 (rear side 4) of the workpiece 1 the plurality of times in the different scanning directions. With this, the appearance of the workpiece 1 can be further precisely inspected.

Yet further, in the appearance inspection device 50 according to this embodiment, the second scanning portion 72 scans the first lateral side 5a (third lateral side 5c) of the workpiece 1 the plurality of times in the different scanning directions. With this, the appearance of the workpiece 1 can be further precisely inspected.

Yet further, in the appearance inspection device 50 according to this embodiment, the first scanning portion 62 and the second scanning portion 72 work cooperatively to scan the second lateral side 5b (fourth lateral side 5d). With this, the inspection time period in the appearance inspection can be further shortened.

Yet further, in the appearance inspection device 50 according to this embodiment, the first scanning portion 62 scans the second lateral side 5b (fourth lateral side 5d) in the top-and-bottom direction, and the second scanning portion 72 scans the second lateral side 5b (fourth lateral side 5d) in the right-and-left-hand direction. With this, the inspection time period in the appearance inspection can be further shortened. Note that, the assignment of the first scanning portion 62 and the second scanning portion 72 for the second lateral side 5b (fourth lateral side 5d) may be made in accordance with the image-capturing angles and the irradiation angles.

Yet further, in the appearance inspection device 50 according to this embodiment, in order to prevent the interference of light, specifically, interference of the light from the first light-emitting portion 68 with the image-capturing performed using the second line camera 77, and to prevent the interference of light, specifically, interference of the light from the second light-emitting portion 78 with the image-capturing performed using the first line camera 67, the scanning movements of the first scanning portion 62 and the second scanning portion 72 are controlled. With this, the interference of light can be properly prevented.

Yet further, in the appearance inspection device 50 according to this embodiment, in order to prevent the interference of light, the timings of turning on and off the first light-emitting portion 68 and the second light-emitting portion 78 are controlled. With this, the interference of light can be further properly prevented.

Yet further, in the appearance inspection device 50 according to this embodiment, in order to prevent the interference of light, the timings of starting and ending the image-capturing performed using the first line camera 67 and the second line camera 77 are controlled. With this, the interference of light can be further properly prevented.

Yet further, in the appearance inspection device 50 according to this embodiment, the front side 3 (rear side 4) to be scanned by the first scanning portion 62, the first lateral side 5a (third lateral side 5c) to be scanned by the second scanning portion 72, and the second lateral side 5b (fourth lateral side 5d) to be scanned by the first scanning portion 62 and the second scanning portion 72 working cooperatively are adjacent to each other. With this, the plurality of sides of the workpiece 1 can be further efficiently inspected by the first scanning portion 62 and the second scanning portion 72.

Note that, in this embodiment, the first appearance-inspection device 50A and the second appearance-inspection device 50B are each formed into an integrated device. Such a formation of the appearance inspection device 50 into an integrated device allows proper adaptation to variation in a production amount of the workpieces 1 on the production line (increase and decrease in production amount). In particular, the formation of the appearance inspection device 50 into an integrated device allows proper adaptation to variation in a production amount of the workpieces 1 on a fraction-by-fraction basis such as 1.3 times and 1.5 times.

In order to make the adaptation to the variation in a production amount, for example, another appearance-inspection device 50 may be arranged in line with and subsequent to the first appearance-inspection device 50A and the second appearance-inspection device 50B. In this case, these three appearance-inspection devices 50 may respectively inspect two sides of the six sides of the workpiece 1. Note that, the other additional appearance-inspection device 50 may be arranged parallel to the first appearance-inspection device 50A and the second appearance-inspection device 50B. Further, the number of additional appearance-inspection devices 50 is not limited to one. Still further, one of the first appearance-inspection device 50A and the second appearance-inspection device 50B may be omitted. In this case, the single appearance-inspection device 50 inspects all the six sides of the workpiece 1.

### <<Various Modifications>>

The workpiece 1 in the case described hereinabove is the stationary game device. Alternatively, the workpiece 1 may be, for example, various electronic apparatuses other than the stationary game device, or various automotive parts. Typically, the workpiece 1 may be any polygonal inspection target (may be a thin target such as a substrate).

The present technology may also take the following configurations.
(1) A noise inspection device including:
   a robot-arm portion that includes an arm portion, and a holding portion that is provided to the arm portion and is capable of holding a workpiece;
   a sound detection portion that is provided to the robot-arm portion and detects sound from the workpiece; and
   a control unit that
   moves, using the arm portion, the holding portion in a state of holding the workpiece to transport the workpiece,
   detects, using the sound detection portion, sound from the workpiece during the transportation of the workpiece, and
   inspects the workpiece for noise generated from the workpiece, on the basis of a signal of the detected sound.
(2) The noise inspection device according to (1), in which
   the control unit
   moves, using the arm portion, the holding portion in first and second directions to transport the workpiece, the holding portion being in a state of holding the workpiece, the second direction being a direction opposite to the first direction,
   detects, using the sound detection portion, a piece of sound generated from the workpiece due to the workpiece being moved in the first direction, and a piece of sound generated from the workpiece due to the workpiece being moved in the second direction, and
   inspects the workpiece for the noise generated from the workpiece, on the basis of signals of the pieces of detected sound.
(3) The noise inspection device according to (2), in which
   the control unit
   moves the holding portion in the first direction to transport the workpiece to a first device that is a device other than the noise inspection device, and
   moves the holding portion in the second direction to transport the workpiece from the first device to a second device that is a device other than the noise inspection device.
(4) The noise inspection device according to any one of (1) to (3), in which
   the control unit
   changes, using the arm portion, a posture of the holding portion in a state of holding the workpiece,
   detects, using the sound detection portion, sound generated from the workpiece due to a change in a posture of the workpiece, and
   inspects the workpiece for the noise generated from the workpiece, on the basis of a signal of the detected sound.
(5) The noise inspection device according to (4), in which
   the control unit changes the posture of the holding portion to enable a first device to perform processing on the workpiece in a state of being held by the holding portion, the first device being a device other than the noise inspection device.
(6) The noise inspection device according to any one of (1) to (5), in which
   the sound detection portion is provided to the holding portion.
(7) The noise inspection device according to any one of (1) to (6), in which
   the sound detection portion detects the sound in contact with the workpiece.
(8) The noise inspection device according to (7), in which
   the sound detection portion is an acoustic emission (AE) sensor.
(9) The noise inspection device according to any one of (1) to (6), in which
   the sound detection portion detects the sound without being in contact with the workpiece.
(10) The noise inspection device according to (9), in which
   the sound detection portion is a microphone.
(11) The noise inspection device according to any one of (1) to (10), in which
   the control unit inspects the workpiece for the noise generated from the workpiece, on the basis of a signal in a specific frequency band in the signal of the sound detected using the sound detection portion.
(12) The noise inspection device according to (11), in which
   the control unit
   integrates the signal in the specific frequency band, and
   inspects the workpiece for the noise generated from the workpiece, on the basis of a value obtained by the integration.
(13) A noise inspection method including:
   moving, using an arm portion included in a robot-arm portion, a holding portion in a state of holding a workpiece to transport the workpiece, the holding portion being included in the robot-arm portion;
   detecting, using a sound detection portion, sound from the workpiece during the transportation of the workpiece, the sound detection portion being provided to the robot-arm portion; and
   inspecting the workpiece for noise generated from the workpiece, on the basis of a signal of the detected sound.
(14) A program that causes a computer to serve as a control unit that performs a process including:
   moving, using an arm portion included in a robot-arm portion, a holding portion in a state of holding a workpiece to transport the workpiece, the holding portion being included in the robot-arm portion;
   detecting, using a sound detection portion, sound from the workpiece during the transportation of the workpiece, the sound detection portion being provided to the robot-arm portion; and
   inspecting the workpiece for noise generated from the workpiece, on the basis of a signal of the detected sound.
(15) A workpiece manufacturing method including:
   moving, using an arm portion included in a robot-arm portion, a holding portion in a state of holding a workpiece to transport the workpiece, the holding portion being included in the robot-arm portion;
   detecting, using a sound detection portion, sound from the workpiece during the transportation of the workpiece, the sound detection portion being provided to the robot-arm portion;
   inspecting the workpiece for noise generated from the workpiece, on the basis of a signal of the detected sound; and
   determining, on the basis of a result of the inspection, whether the workpiece is non-defective or defective.

### Reference Signs List

- 1: workpiece
- 2: casing
- 3: front side
- 4: rear side
- 5: lateral side
- 5a to 5d: first lateral side to fourth lateral side
- 13: control unit
- 10: noise inspection device
- 12: robot-arm portion
- 21: arm portion
- 31: hand portion
- 35: sound detection portion
- 40: label application device
- 50: appearance inspection device
- 50A: first appearance-inspection device
- 50B: second appearance-inspection device
- 53: control unit
- 60: first robot-arm portion
- 61: first arm portion
- 62: first scanning portion
- 67: first line camera
- 68: first light-emitting portion
- 70: second robot-arm portion
- 71: second arm portion
- 72: second scanning portion
- 77: second line camera
- 78: second light-emitting portion
- 80: first transportation device
- 90: second transportation device
- 100: inspection system

## Claims

1. A noise inspection device comprising:
a robot-arm portion that includes an arm portion, and a holding portion that is provided to the arm portion and is capable of holding a workpiece;
a sound detection portion that is provided to the robot-arm portion and detects sound from the workpiece; and
a control unit that
moves, using the arm portion, the holding portion in a state of holding the workpiece to transport the workpiece,
detects, using the sound detection portion, sound from the workpiece during the transportation of the workpiece, and
inspects the workpiece for noise generated from the workpiece, on a basis of a signal of the detected sound.

2. The noise inspection device according to claim 1, wherein
the control unit
moves, using the arm portion, the holding portion in first and second directions to transport the workpiece, the holding portion being in a state of holding the workpiece, the second direction being a direction opposite to the first direction,
detects, using the sound detection portion, a piece of sound generated from the workpiece due to the workpiece being moved in the first direction, and a piece of sound generated from the workpiece due to the workpiece being moved in the second direction, and
inspects the workpiece for the noise generated from the workpiece, on a basis of signals of the pieces of detected sound.

3. The noise inspection device according to claim 2, wherein
the control unit
moves the holding portion in the first direction to transport the workpiece to a first device that is a device other than the noise inspection device, and
moves the holding portion in the second direction to transport the workpiece from the first device to a second device that is a device other than the noise inspection device.

4. The noise inspection device according to claim 1, wherein
the control unit
changes, using the arm portion, a posture of the holding portion in a state of holding the workpiece,
detects, using the sound detection portion, sound generated from the workpiece due to a change in a posture of the workpiece, and
inspects the workpiece for the noise generated from the workpiece, on a basis of a signal of the detected sound.

5. The noise inspection device according to claim 4, wherein
the control unit changes the posture of the holding portion to enable a first device to perform processing on the workpiece in a state of being held by the holding portion, the first device being a device other than the noise inspection device.

6. The noise inspection device according to claim 1, wherein
the sound detection portion is provided to the holding portion.

7. The noise inspection device according to claim 1, wherein
the sound detection portion detects the sound in contact with the workpiece.

8. The noise inspection device according to claim 7, wherein
the sound detection portion is an acoustic emission (AE) sensor.

9. The noise inspection device according to claim 1, wherein
the sound detection portion detects the sound without being in contact with the workpiece.

10. The noise inspection device according to claim 9, wherein
the sound detection portion is a microphone.

11. The noise inspection device according to claim 1, wherein
the control unit inspects the workpiece for the noise generated from the workpiece, on a basis of a signal in a specific frequency band in the signal of the sound detected using the sound detection portion.

12. The noise inspection device according to claim 11, wherein
the control unit
integrates the signal in the specific frequency band, and
inspects the workpiece for the noise generated from the workpiece, on a basis of a value obtained by the integration.

13. A noise inspection method comprising:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion; and
inspecting the workpiece for noise generated from the workpiece, on a basis of a signal of the detected sound.

14. A program that causes a computer to serve as a control unit that performs a process comprising:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion; and
inspecting the workpiece for noise generated from the workpiece, on a basis of a signal of the detected sound.

15. A workpiece manufacturing method comprising:
moving, using an arm portion included in a robot-arm portion, a holding portion in a state of holding a workpiece to transport the workpiece, the holding portion being included in the robot-arm portion;
detecting, using a sound detection portion, sound from the workpiece during the transportation of the workpiece, the sound detection portion being provided to the robot-arm portion;
inspecting the workpiece for noise generated from the workpiece, on a basis of a signal of the detected sound; and
determining, on a basis of a result of the inspection, whether the workpiece is non-defective or defective.
